# EUROPEAN PATENT APPLICATION

(11) **EP 4 738 956 A1**
(43) Date of publication of application: **06.05.2026**
(21) Application number: 23943052.3
(22) Date of filing: 30.06.2023
(51) Int. Cl.: H04W 72/0446

(54) **UPLINK COMMUNICATION PROCESSING METHOD, COMMUNICATION DEVICE, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Stöckeler, Ferdinand
(86) International application number: PCT/CN2023/105442
(87) International publication number: WO 2025/000563

(57) **Abstract**

The present disclosure relates to the technical field of communications, in particular to an uplink communication processing method, a communication device, and a storage medium. The uplink communication processing method comprises: sending a transport block over multi-slot physical uplink shared channel (TBoMS PUSCH) on the basis of a predefined rule, wherein in a first time-domain unit, the TBoMS PUSCH conflicts with a broadcast message, the first time-domain unit being configured with a sub-band. According to the present disclosure, in some SBFD time-domain units, even if the TBoMS PUSCH conflicts with the broadcast message, the TBoMS technology can also be applied, thereby facilitating ensuring the uplink coverage gain brought for sending the TBoMS PUSCH in an SBFD slot.

## Description

### TECHNICAL FIELD

The disclosure relates to the field of communication technology, specifically to a method for uplink communication processing, a terminal, a network device, a communication device and a storage medium.

### BACKGROUND

A network device may communicate with a terminal in time-domain units, and within a slot unit, the network device can only perform uplink communication or downlink communication. To improve communication efficiency, the network device may be enabled to perform both UP communication and downlink communication within a slot unit, thereby realizing full-duplex communication of the network device. However, in the full-duplex communication scenario, some technical issues may exist.

### SUMMARY

Embodiments of the disclosure provide a method for uplink communication processing, a terminal, a network device, a communication device and a storage medium, so as to solve the technical problems existing when a network device performs communication after configuring a subband for a terminal in related arts.

According to a first aspect of the embodiments of the disclosure, a method for uplink communication processing, and the method includes: sending a transport block processing over multiple slots (TBoMS) physical uplink shared channel (PUSCH) according to a predefined rule, in which the TBoMS PUSCH conflicts with a broadcast message in a first time-domain unit, and the first time-domain unit is configured with a subband.

According to a second aspect of the embodiments of the disclosure, a method for uplink communication processing, and the method includes: receiving, according to a predefined rule, a TBoMS PUSCH sent by a terminal, in which the TBoMS PUSCH conflicts with a broadcast message in a first time-domain unit, and the first time-domain unit is configured with a subband.

According to a third aspect of the embodiments of the disclosure, a method for uplink communication processing, and the method includes: a terminal sending a TBoMS PUSCH according to a predefined rule, in which the TBoMS PUSCH conflicts with a broadcast message in a first time-domain unit, and the first time-domain unit is configured with a subband; and a network device receiving, according to the predefined rule, the TBoMS PUSCH sent by the terminal.

According to a fourth aspect of the embodiments of the disclosure, a terminal is provided, and the terminal includes: one or more processors, in which the terminal is configured to implement the method for uplink communication processing according to the first aspect.

According to a fifth aspect of the embodiments of the disclosure, a network device is provided, and the network device includes: one or more processors, in which the terminal is configured to implement the method for uplink communication processing according to the second aspect.

According to a sixth aspect of the embodiments of the disclosure, a communication device is provided, and the communication device includes: one or more processors; in which the one or more processors are configured to invoke instructions to cause the communication device to perform the method for uplink communication processing according to the first aspect or the second aspect.

According to a seventh aspect of the embodiments of the disclosure, a communication system is provided, and the communication system includes: a terminal and a network device, in which the terminal is configured to implement the method for uplink communication processing according to the first aspect, and the network device is configured to implement the method for uplink communication processing according to the second aspect.

According to an eighth aspect of the embodiments of the disclosure, a storage medium is provided, and the storage medium stores instructions which, when run on a communication device, cause the communication device to implement the method for uplink communication processing according to the first aspect or the second aspect.

According to the embodiments of the disclosure, in some subband full duplex (SBFD) time-domain units, the TBoMS technology may still be applied even if the TBoMS PUSCH conflicts with the broadcast message, which helps ensure an uplink coverage gain brought by sending the TBoMS PUSCH in an SBFD slot.

### BRIEF DESCRIPTION OF THE DRAWINGS

To more clearly illustrate the technical solutions in the embodiments of the disclosure, the accompanying drawings required for describing the embodiments are introduced below. Obviously, the accompanying drawings in the following description are merely some embodiments of the disclosure. For those of ordinary skill in the art, other accompanying drawings may also be obtained based on these drawings without exerting creative labor.
FIG. 1 is a schematic diagram of a communication system according to an embodiment of the disclosure.
FIG. 2 is an interaction schematic diagram of a method for uplink communication processing according to an embodiment of the disclosure.
FIG. 3 is a schematic flowchart of a method for uplink communication processing according to an embodiment of the disclosure.
FIG. 4 is a schematic diagram of a subband according to an embodiment of the disclosure.
FIG. 5 is a schematic diagram of a conflict according to an embodiment of the disclosure.
FIG. 6A is a schematic diagram of a conflict according to another embodiment of the disclosure.
FIG. 6B is a schematic diagram of a processing result according to an embodiment of the disclosure.
FIG. 6C is a schematic diagram of a processing result according to another embodiment of the disclosure.
FIG. 7 is a schematic diagram of a processing result according to an embodiment of the disclosure.
FIG. 8 is a schematic flowchart of a method for uplink communication processing according to an embodiment of the disclosure.
FIG. 9 is a schematic block diagram of a terminal according to an embodiment of the disclosure.
FIG. 10 is a schematic block diagram of a network device according to an embodiment of the disclosure.
FIG. 11 is a schematic diagram of a communication device according to an embodiment of the disclosure.
FIG. 12 is a schematic diagram of a chip according to an embodiment of the disclosure.

### DETAILED DESCRIPTION

The embodiments of the disclosure provide a method for uplink communication processing, a terminal, a network device, a communication device and a storage medium.

According to a first aspect of the embodiments of the disclosure, a method for uplink communication processing, and the method includes: sending a transport block processing over multiple slots (TBoMS) physical uplink shared channel (PUSCH) according to a predefined rule, in which the TBoMS PUSCH conflicts with a broadcast message in a first time-domain unit, and the first time-domain unit is configured with an uplink subband (UL subband).

In the above embodiments, when the terminal determines that the TBoMS PUSCH conflicts with broadcast message in a subband full duplex (SBFD) time-domain unit, the terminal may not default to not expecting to send the TBoMS PUSCH on the SBFD time-domain unit, but may determine a processing manner for the TBoMS PUSCH according to the predefined rule. For example, the TBoMS PUSCH may be sent on the SBFD time-domain unit, or may not be sent on the SBFD time-domain unit. Accordingly, in some SBFD time-domain units, the TBoMS technology may still be applied even if the TBoMS PUSCH conflicts with broadcast message, which helps ensure an uplink coverage gain brought by sending the TBoMS PUSCH in an SBFD slot.

In combination with some embodiments of the first aspect, in some embodiments, sending the TBoMS PUSCH according to the predefined rule includes at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, sending the TBoMS PUSCH in a second time-domain unit,
in which the second time-domain unit is different from the first time-domain unit.

In combination with some embodiments of the first aspect, in some embodiments, sending the TBoMS PUSCH according to the predefined rule includes at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, not expecting to send the TBoMS PUSCH in the first time-domain unit.

In combination with some embodiments of the first aspect, in some embodiments, sending the TBoMS PUSCH according to the predefined rule includes: in a case where a first frequency-domain resource of the TBoMS PUSCH is not fully located within the UL subband, determining a second frequency-domain resource within the UL subband; and sending the TBoMS PUSCH in the second frequency-domain resource.

In the above embodiments, when the first frequency-domain resource of the TBoMS PUSCH is not fully located within the UL subband, the TBoMS PUSCH may also be sent in the conflicting SBFD time-domain unit by determining the second frequency-domain resource, which helps ensure the uplink coverage gain brought by sending the TBoMS PUSCH in the SBFD slot.

In combination with some embodiments of the first aspect, in some embodiments, determining the second frequency-domain resource within the UL subband includes:
determining, within the UL subband, a frequency-domain resource with a continuous first frequency-domain range starting from a first frequency-domain position as the second frequency-domain resource, in which the first frequency-domain range is determined based on the first frequency-domain resource.

In combination with some embodiments of the first aspect, in some embodiments, sending the TBoMS PUSCH according to the predefined rule further includes at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, sending the TBoMS PUSCH in a second time-domain unit;
in which the second time-domain unit is different from the first time-domain unit.

In combination with some embodiments of the first aspect, in some embodiments, sending the TBoMS PUSCH according to the predefined rule further includes at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, not expecting to send the TBoMS PUSCH in the first time-domain unit.

In combination with some embodiments of the first aspect, in some embodiments, sending the TBoMS PUSCH according to the predefined rule further includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit,
in which the second time-domain unit is different from the first time-domain unit.

In combination with some embodiments of the first aspect, in some embodiments, sending the TBoMS PUSCH according to the predefined rule further includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In the above embodiments, when the first frequency-domain interval is less than the frequency-domain interval threshold, the network device sends the broadcast message in the conflicting time-domain unit and receives the TBoMS PUSCH in the same time-domain unit. An inter-frequency interference between the TBoMS PUSCH and the broadcast messages is relatively large, which has a significant impact on communication quality. Therefore, the terminal does not expect to send the TBoMS PUSCH in the conflicting time-domain unit, which helps ensure relatively good communication quality.

In combination with some embodiments of the first aspect, in some embodiments, the second time-domain unit is not configured with a subband.

In combination with some embodiments of the first aspect, in some embodiments, a case where the TBoMS PUSCH conflicts with the broadcast message in a time-domain unit configured with a subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

In the above embodiments, by considering conflict scenarios in various cases, it helps ensure comprehensive consideration of conflict situations, thereby enabling more comprehensive determination of the processing manner for the TBoMS PUSCH under conflict scenarios.

In combination with some embodiments of the first aspect, in some embodiments, the broadcast message includes at least one of: a synchronization signal block (SSB); or a common search space (CSS).

According to a second aspect of the embodiments of the disclosure, a method for uplink communication processing, and the method includes: receiving a TBoMS PUSCH according to a predefined rule, in which the TBoMS PUSCH conflicts with a broadcast message in a first time-domain unit, and the first time-domain unit is configured with a UL subband.

In combination with some embodiments of the second aspect, in some embodiments, receiving, according to the predefined rule, the TBoMS PUSCH sent by the terminal includes at least one of: in a case where a first frequency-domain resource of the TBoMS PUSCH is fully located within the UL subband, receiving the TBoMS PUSCH in the first time-domain unit; or in a case where a first frequency-domain resource of the TBoMS PUSCH is not fully located within the UL subband, receiving the TBoMS PUSCH in a second time-domain unit, in which the second time-domain unit is different from the first time-domain unit.

In combination with some embodiments of the second aspect, in some embodiments, the predefined rule indicates that: in a case where the first frequency-domain resource of the TBoMS PUSCH is not fully located within the UL subband, receiving the TBoMS PUSCH in a second frequency-domain resource, in which the second frequency-domain resource is fully located within the UL subband.

In combination with some embodiments of the first aspect, in some embodiments, receiving, according to the predefined rule, the TBoMS PUSCH sent by the terminal includes:
in a case where a first frequency-domain resource of the TBoMS PUSCH is not fully located within the UL subband, determining a second frequency-domain resource within the UL subband; and
receiving the TBoMS PUSCH in the second frequency-domain resource.

In combination with some embodiments of the first aspect, in some embodiments, determining the second frequency-domain resource within the UL subband includes: determining, within the UL subband, a frequency-domain resource with a continuous first frequency-domain range starting from a first frequency-domain position as the second frequency-domain resource, in which the first frequency-domain range is determined based on the first frequency-domain resource.

In combination with some embodiments of the first aspect, in some embodiments, receiving, according to the predefined rule, the TBoMS PUSCH sent by the terminal includes at least one of: in a case where a frequency-domain range of the first frequency-domain resource is less than or equal to a frequency-domain range of the UL subband, receiving the TBoMS PUSCH in the first time-domain unit; or in a case where a frequency-domain range of the first frequency-domain resource is greater than a frequency-domain range of the UL subband, receiving the TBoMS PUSCH in a second time-domain unit, in which the second time-domain unit is different from the first time-domain unit.

In combination with some embodiments of the first aspect, in some embodiments, receiving, according to the predefined rule, the TBoMS PUSCH sent by the terminal includes at least one of: in a case where a frequency-domain range of the first frequency-domain resource is less than or equal to a frequency-domain range of the UL subband, receiving the TBoMS PUSCH in the first time-domain unit; or in a case where a frequency-domain range of the first frequency-domain resource is greater than a frequency-domain range of the UL subband, not expecting to receive the TBoMS PUSCH in the first time-domain unit.

In combination with some embodiments of the first aspect, in some embodiments, receiving, according to the predefined rule, the TBoMS PUSCH sent by the terminal includes at least one of: in a case where a first frequency-domain interval between the UL subband and the broadcast message is greater than or equal to a frequency-domain interval threshold, receiving the TBoMS PUSCH in the first time-domain unit; in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit;
in which the second time-domain unit is different from the first time-domain unit.

In combination with some embodiments of the first aspect, in some embodiments, receiving, according to the predefined rule, the TBoMS PUSCH sent by the terminal includes at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit.

In combination with some embodiments of the first aspect, in some embodiments, the second time-domain unit is not configured with a subband.

In combination with some embodiments of the first aspect, in some embodiments, a case where the TBoMS PUSCH conflicts with the broadcast message in a time-domain unit configured with a subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

In combination with some embodiments of the first aspect, in some embodiments, the broadcast message includes at least one of: an SSB; or a CSS.

According to a third aspect of the embodiments of the disclosure, a method for uplink communication processing, and the method includes: a terminal sending a TBoMS PUSCH according to a predefined rule, in which the TBoMS PUSCH conflicts with a broadcast message in a first time-domain unit, and the first time-domain unit is configured with a UL subband; and a network device receiving, according to the predefined rule, the TBoMS PUSCH sent by the terminal.

According to a fourth aspect of the embodiments of the disclosure, a terminal is provided, and the terminal includes: one or more processors, in which the terminal is configured to implement the method for uplink communication processing according to the above first aspect and the embodiments of the first aspect.

According to a fifth aspect of the embodiments of the disclosure, a network device is provided, and the network device includes: one or more processors, in which the network device is configured to implement the method for uplink communication processing according to the above second aspect and the embodiments of the second aspect.

According to a sixth aspect of the embodiments of the disclosure, a communication device is provided, and the communication device includes: one or more processors, and one or more memories for storing instructions, in which the one or more processors are configured to the invoke instructions to cause the communication device to perform the method for uplink communication processing according to the first aspect and the embodiments of the first aspect, or according to the second aspect and the embodiments of the second aspect.

According to a seventh aspect of the embodiments of the disclosure, a communication system is provided, and the communication system includes: a terminal and a network device, in which the terminal is configured to implement the method for uplink communication processing according to the first aspect and the embodiments of the first aspect, and the network device is configured to implement the method for uplink communication processing the second aspect and the embodiments of the second aspect.

According to an eighth aspect of the embodiments of the disclosure, a storage medium is provided, and the storage medium stores instructions which, when run on a communication device, cause the communication device to implement the method for uplink communication processing according to the first aspect and the embodiments of the first aspect, or according to the second aspect and the embodiments of the second aspect.

According to a ninth aspect of the embodiments of the disclosure, a program product is provided which, when executed by a communication device, causes the communication device to implement the method for uplink communication processing according to the first aspect and the embodiments of the first aspect, or according to the second aspect and the embodiments of the second aspect.

According to a tenth aspect of the embodiments of the disclosure, a computer program is provided which, when run on a computer, causes the computer to implement the method for uplink communication processing according to the first aspect and the embodiments of the first aspect, or according to the second aspect and the embodiments of the second aspect.

It may be understood that the aforementioned terminal, network device, communication device, communication system, storage medium, program product, and computer program are all configured to perform the methods proposed by the embodiments of the disclosure. Therefore, the beneficial effects they can achieve may refer to the beneficial effects in the corresponding methods, which are not repeated here.

The embodiments of the disclosure provide a method for uplink communication processing, a communication device, and a storage medium. In some embodiments, the term "method for uplink communication processing" may be used interchangeably with terms such as "information processing method" and "communication method". The terms "terminal", "network device", "information processing apparatus", and "communication apparatus" may be used interchangeably. The terms "information processing system" and "communication system" may be used interchangeably.

The embodiments of the disclosure are not exhaustive but merely illustrative of some embodiments, and shall not serve as specific limitations on the protection scope of the disclosure. Without conflict, each step in a certain embodiment may be implemented as an independent embodiment, and the steps may be combined arbitrarily. For example, the solution after removing some steps in a certain embodiment may also be implemented as an independent embodiment, and the order of the steps in a certain embodiment may be swapped arbitrarily. In addition, implementations in a certain embodiment may be combined arbitrarily; furthermore, the embodiments may be combined arbitrarily. For example, some or all steps of different embodiments may be combined arbitrarily, and a certain embodiment may be combined arbitrarily with implementations of other embodiments.

In each embodiment of the disclosure, unless otherwise specified and without logical conflict, the terms and/or descriptions between the embodiments are consistent and may be cross-referenced. Technical features in different embodiments may be combined to form new embodiments according to their inherent logical relationships.

The terms used in the embodiments of the disclosure are merely for the purpose of describing specific embodiments and are not intended to limit the disclosure.

In the embodiments of the disclosure, unless otherwise stated, elements expressed in the singular form, such as "a", "an", "the", "said", "aforesaid", and "this", may mean "one and only one", or "one or more", "at least one", etc.

In the embodiments of the disclosure, "a plurality of' refers to two or more.

In some embodiments, terms such as "at least one (of)", "one or more", "a plurality of", and "multiple" may be used interchangeably.

In some embodiments, recording methods such as "at least one of A and B", "A and/or B", "A in one case and B in another case", and "one case A and another case B" may include the following technical solutions depending on the context: executing A in some embodiments (executing A independently of B); executing B in some embodiments (executing B independently of A); selectively executing either A or B in some embodiments (A and B are selectively executed); and executing both A and B in some embodiments (both A and B are executed). The same applies when there are more branches such as A, B, and C.

In some embodiments, recording methods such as "A or B" may include the following technical solutions depending on the context: executing A in some embodiments (executing A independently of B); executing B in some embodiments (executing B independently of A); and selectively executing either A or B in some embodiments (A and B are selectively executed). The same applies when there are more branches such as A, B, and C.

Prefixes such as "first" and "second" in the embodiments of the disclosure are merely used to distinguish different description objects and do not limit the position, order, priority, quantity, or content of the description objects. For the description of the description objects, refer to the description in the claims or the context of the embodiments, and unnecessary limitations shall not be constituted due to the use of the prefixes.

In some embodiments, expressions such as "including A", "comprising A", "used to indicate A", and "carrying A" may be interpreted as directly carrying A or indirectly indicating A.

In some embodiments, terms such as "...", "determine...", "in the case of...", "when...", "if...", and "in the event that..." may be used interchangeably.

In some embodiments, an apparatus or the like may be interpreted as physical or virtual, and its name is not limited to the name recorded in the embodiments.

Terms such as "apparatus", "equipment", "device", "circuit", "network element", "node", "function", "unit", "section", "system", "network", "chip", "chip system", "entity", and "subject" may be used interchangeably.

In some embodiments, the term "network" may be interpreted as an apparatus included in a network (e.g., an access network device, a core network device, etc.).

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" may be used interchangeably.

In some embodiments, terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "wireless terminal", "remote terminal", "handset", "user agent", "mobile client", and "client" may be used interchangeably.

In some embodiments, data, information, etc., may be acquired with the user's consent.

In addition, each element, each row, or each column in the tables of the embodiments of the disclosure may be implemented as an independent embodiment, and any combination of any elements, any rows, or any columns may also be implemented as an independent embodiment.

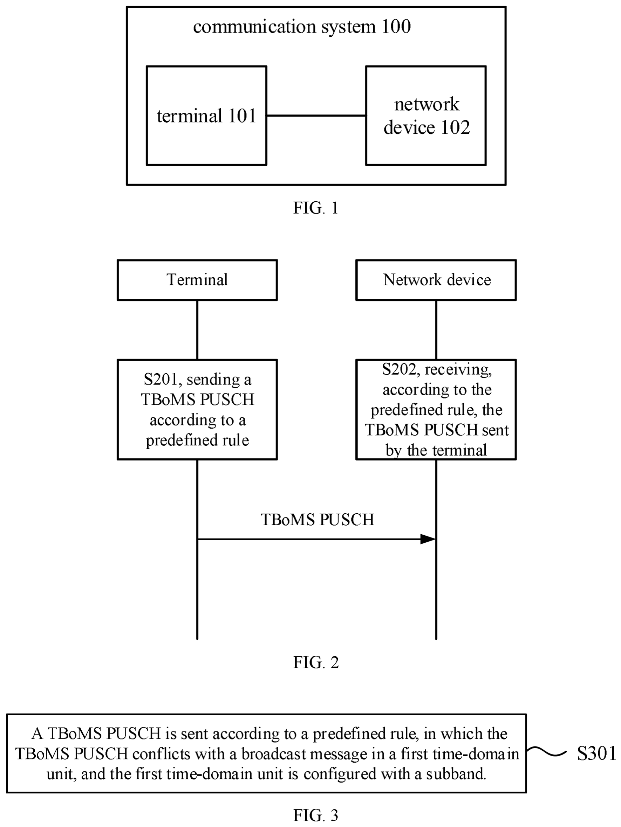

**FIG.** 1 is a schematic diagram of a communication system according to an embodiment of the disclosure.

**As** shown in FIG. 1, the communication system 100 includes a terminal 101 and a network device 102. The network device 102 may include at least one of an access network device or a core network device.

In some embodiments, the terminal 101 includes, for example, at least one of a mobile phone, a wearable device, an Internet of Things (IoT) device, a vehicle with communication functions, an intelligent vehicle, a tablet computer (Pad), a computer with wireless transceiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device is, for example, a node or device that accesses terminals to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (open RAN), a cloud base station (cloud RAN), a base station in other communication systems, and an access node in a Wi-Fi system, but is not limited thereto.

In some embodiments, the core network device may be a single device including one or more network elements, or may be a plurality of devices or device groups respectively including all or part of the aforementioned one or more network elements. The network elements may be virtual or physical. A core network includes, for example, at least one of an evolved packet core (EPC), a 5G core network (5GCN), or a next generation core (NGC).

In some embodiments, the technical solutions of the disclosure may be applicable to an open RAN architecture. In this case, the interfaces between access network devices or within an access network device involved in the embodiments of the disclosure may become internal interfaces of the open RAN, and the processes and information interaction between these internal interfaces may be implemented through software or programs.

In some embodiments, the access network device may be composed of a central unit (CU) and a distributed unit (DU). The CU may also be referred to as a control unit. The CU-DU structure may split the protocol layers of the access network device, with functions of some protocol layers centrally controlled by the CU, and functions of the remaining part or all of the protocol layers distributed in the DU, where the CU centrally controls the DU, but is not limited thereto.

It is understandable that the communication system described in the embodiments of the disclosure is for the purpose of more clearly illustrating the technical solutions of the embodiments of the disclosure, and does not constitute a limitation on the technical solutions proposed in the embodiments of the disclosure. As understood by those of ordinary skill in the art, with the evolution of system architectures and the emergence of new service scenarios, the technical solutions proposed in the embodiments of the disclosure are equally applicable to similar technical problems.

The following embodiments of the disclosure may be applied to the communication system 100 shown in FIG. 1, or some subjects in the communication system 100, but are not limited thereto. Each subject shown in FIG. 1 is an example. The communication system may include all or part of the subjects in FIG. 1, or may include other subjects not shown in FIG. 1. The number and form of each subject are arbitrary. The connection relationship between each subject is an example. Each subject may be unconnected or connected, and the connection may be in any manner, either direct connection or indirect connection, wired connection or wireless connection.

The embodiments of the disclosure may be applied to long term evolution (LTE), LTE-advanced (LTE-A), LTE-beyond (LTE-B), SUPER 3G, international mobile telecommunications-advanced (IMT-Advanced), 4th generation mobile communication system (4G), 5th generation mobile communication system (5G), 5G new radio (NR), future radio access (FRA), new-radio access technology (new RAT), NR, new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wide band (UWB), Bluetooth (registered trademark), public land mobile network (PLMN), device-to-device (D2D) system, machine to machine (M2M) system, internet of things (IoT) system, vehicle-to-everything (V2X), systems using other communication methods, next-generation systems extended based on them, etc. In addition, a plurality of systems may be combined (for example, a combination of LTE or LTE-A and 5G, etc.) for application.

In some embodiments, the network device may configure a subband for the terminal.

In some embodiments, the subband includes at least one of: a UL subband, or a downlink subband (DL subband).

In some embodiments, the network device may configure the UL subband for the terminal in a first type of slot, in which the first type of slot includes at least one of: a downlink slot, or a flexible slot.

A frequency-domain resource corresponding to the downlink slot is a downlink frequency-domain resource. When the UL subband is configured for the terminal in the downlink slot, a frequency-domain resource corresponding to the UL subband among the frequency-domain resource of the downlink slot may be used for uplink communication. Thus, the network device may perform the uplink communication in the UL subband corresponding to the downlink slot and perform downlink communication in a frequency-domain resource other than the UL subband, thereby realizing full-duplex communication.

A frequency-domain resource corresponding to the flexible slot may be configured or scheduled as a downlink frequency-domain resource. When the UL subband is configured for the terminal in the flexible slot, a frequency-domain resource corresponding to the UL subband among the frequency-domain resource of the flexible slot may be used for uplink communication. Thus, the network device may perform the uplink communication in the UL subband corresponding to the flexible slot and perform downlink communication in a frequency-domain resource other than the UL subband, thereby realizing full-duplex communication. For example, a time-domain unit configured with the subband may be referred to as a subband based full duplex (SBFD) time-domain unit.

In some embodiments, the network device may configure the DL subband for the terminal in a second type of slot, where the second type of slot includes at least one of the following: an uplink slot, or a flexible slot.

A frequency-domain resource corresponding to the uplink slot is an uplink frequency-domain resource. When the DL subband is configured for the terminal in the uplink slot, a frequency-domain resource corresponding to the DL subband among the frequency-domain resource of the uplink slot may be used for downlink communication. Thus, the network device may perform the downlink communication in the DL subband corresponding to the uplink slot and perform uplink communication in a frequency-domain resource other than the DL subband, thereby realizing full-duplex communication.

A frequency-domain resource corresponding to the flexible slot may be configured or scheduled as an uplink frequency-domain resource. When the DL subband is configured for the terminal in the flexible slot, a frequency-domain resource corresponding to the DL subband among the frequency-domain resource of the flexible slot may be used for downlink communication. Thus, the network device may perform the downlink communication in the DL subband corresponding to the flexible slot and perform uplink communication in a frequency-domain resource other than the DL subband, thereby realizing full-duplex communication.

In some embodiments, the communication that the terminal and the network device may perform in the time-domain unit includes at least one of: data communication, or non-data communication (such as signaling communication).

When the terminal performs the data communication in the time-domain unit (for example, the terminal sends a transport block (TB) to the network device or receives the TB sent by the network device), in certain scenarios, the data communication may be performed in a plurality of time-domain units. For example, when the time-domain unit includes a slot, the terminal may send a PUSCH based on TBoMS to the network device in a plurality of slots. In some embodiments, the time-domain resource and/or frequency-domain resource used for sending the TBoMS PUSCH in each slot may be the same.

In some embodiments, the TBoMS PUSCH may be combined with a physical downlink shared channel (PDSCH) repetition. For example, the TBoMS PUSCH occupies n slots, and relevant content of one TB may be sent in the n slots. The TB may be repeatedly sent k times, that is, the number of PDSCH repetitions is k. Then, the terminal sends the TB based on the TBoMS PUSCH and the PDSCH repetition, and may send the PUSCH over n ×k slots.

In some embodiments, when the plurality of time-domain units used for sending the TBoMS PUSCH include an SBFD time-domain unit, since both uplink communication and downlink communication may be performed on the SBFD time-domain unit, there may be a conflict between the broadcast message sent by the network device and the TBoMS PUSCH on the SBFD time-domain unit.

FIG. 2 is an interaction schematic diagram of a method for uplink communication processing according to an embodiment of the disclosure.

As shown in FIG. 2, the method for uplink communication processing includes:
At step S201, a terminal sends a TBoMS PUSCH according to a predefined rule.

In some embodiments, the predefined rule may be determined according to a protocol convention.

In some embodiments, the TBoMS PUSCH is sent from the terminal to the network device.

In some embodiments, the predefined rule is used to indicate a processing manner for the TBoMS PUSCH.

In some embodiments, the TBoMS PUSCH is sent based on TBoMS.

In some embodiments, the predefined rule is used to instruct the terminal on the processing manner for the TBoMS PUSCH when the TBoMS PUSCH conflicts with a broadcast message in a time-domain unit configured with a subband.

**In** some embodiments, a conflict includes at least one of: determining that a conflict is occurring; or predicting that a conflict will occur in a future time-domain unit.

In some embodiments, a case where the TBoMS PUSCH conflicts with the broadcast message in the time-domain unit configured with the subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

In some embodiments, the broadcast message conflict include at least one of: an SSB or a CSS.

In some embodiments, the predefined rule is used to indicate at least one of: in a case where a first frequency-domain resource of the TBoMS PUSCH is fully located within the UL subband, sending the TBoMS PUSCH a first time-domain unit; or in a case where a first frequency-domain resource of the TBoMS PUSCH is not fully located within the UL subband, sending the TBoMS PUSCH in a second time-domain unit.

**In** some embodiments, the terminal sending the TBoMS PUSCH according to the predefined rule includes at least one of: in a case where the first frequency-domain resource of the TBoMS PUSCH is fully located within the UL subband, sending the TBoMS PUSCH in the first time-domain unit; or in a case where the first frequency-domain resource of the TBoMS PUSCH is not fully located within the UL subband, sending the TBoMS PUSCH in the second time-domain unit, in which the second time-domain unit is different from the first time-domain unit.

In some embodiments, the predefined rule is used to indicate at least one of: in a case where a first frequency-domain resource of the TBoMS PUSCH is fully located within the UL subband, sending the TBoMS PUSCH in the time-domain unit; or in a case where a first frequency-domain resource of the TBoMS PUSCH is not fully located within the UL subband, not expecting to send the TBoMS PUSCH in the time-domain unit.

In some embodiments, the terminal sending the TBoMS PUSCH according to the predefined rule includes at least one of: in a case where the first frequency-domain resource of the TBoMS PUSCH is fully located within the UL subband, sending the TBoMS PUSCH in the time-domain unit; or in a case where the first frequency-domain resource of the TBoMS PUSCH is not fully located within the UL subband, not expecting to send the TBoMS PUSCH in the time-domain unit.

In some embodiments, the predefined rule is used to indicate that: in a case where a first frequency-domain resource of the TBoMS PUSCH is not fully located within the UL subband, the TBoMS PUSCH is sent in a second frequency-domain resource, in which the second frequency-domain resource is fully located within the UL subband.

In some embodiments, the terminal sending the TBoMS PUSCH according to the predefined rule includes: in the case where the first frequency-domain resource of the TBoMS PUSCH is not fully located within the UL subband, determining the second frequency-domain resource within the UL subband; and sending the TBoMS PUSCH in the second frequency-domain resource.

In some embodiments, the terminal determining the second frequency-domain resource within the UL subband includes: determining, within the UL subband, a frequency-domain resource with a continuous first frequency-domain range starting from a first frequency-domain position as the second frequency-domain resource, in which the first frequency-domain range is determined based on the first frequency-domain resource.

In some embodiments, the predefined rule is used to indicate at least one of: in a case where a frequency-domain range of the first frequency-domain resource is less than or equal to a frequency-domain range of the UL subband, sending the TBoMS PUSCH in the first time-domain unit; or in a case where a frequency-domain range of the first frequency-domain resource is greater than a frequency-domain range of the UL subband, sending the TBoMS PUSCH in the second time-domain unit.

In some embodiments, the terminal sending the TBoMS PUSCH according to the predefined rule includes at least one of: in a case where the frequency-domain range of the first frequency-domain resource is less than or equal to the frequency-domain range of the UL subband, sending the TBoMS PUSCH in the first time-domain unit; or in a case where the frequency-domain range of the first frequency-domain resource is greater than the frequency-domain range of the UL subband, sending the TBoMS PUSCH in the second time-domain unit, in which the second time-domain unit is different from the first time-domain unit.

In some embodiments, the predefined rule is used to indicate at least one of: in a case where a frequency-domain range of the first frequency-domain resource is less than or equal to a frequency-domain range of the UL subband, sending the TBoMS PUSCH in the first time-domain unit; or in a case where a frequency-domain range of the first frequency-domain resource is greater than a frequency-domain range of the UL subband, not expecting to send the TBoMS PUSCH in the first time-domain unit.

In some embodiments, the terminal sending the TBoMS PUSCH according to the predefined rule includes at least one of: in a case where the frequency-domain range of the first frequency-domain resource is less than or equal to the frequency-domain range of the UL subband, sending the TBoMS PUSCH in the first time-domain unit; or in a case where the frequency-domain range of the first frequency-domain resource is greater than the frequency-domain range of the UL subband, not expecting to send the TBoMS PUSCH in the first time-domain unit.

In some embodiments, the predefined rule is used to indicate at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the terminal sending the TBoMS PUSCH according to the predefined rule includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

The second time-domain unit is different from the first time-domain unit

In some embodiments, the predefined rule is used to indicate at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the terminal sending the TBoMS PUSCH according to the predefined rule includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the terminal may determine, according to predefined rule, the first frequency-domain interval between the first frequency-domain resource corresponding to the TBoMS PUSCH and the broadcast message in a conflicting time-domain unit.

For example, when the first frequency-domain interval is less than the frequency-domain interval threshold, the terminal does not expect to send the TBoMS PUSCH in the conflicting time-domain unit.

For example, when the first frequency-domain interval is greater than or equal to the frequency-domain interval threshold, the network device sends the broadcast message in the conflicting time-domain unit, and the terminal may send the TBoMS PUSCH in the conflicting time-domain unit.

In some embodiments, the terminal may determine, according to the predefined rule, the first frequency-domain interval between the UL subband and the broadcast message in the conflicting time-domain unit.

For example, when the first frequency-domain interval is less than the frequency-domain interval threshold, the terminal does not expect to send the TBoMS PUSCH in the conflicting time-domain unit.

For example, when the first frequency-domain interval is greater than or equal to the frequency-domain interval threshold, the terminal may send the TBoMS PUSCH in the conflicting time-domain unit.

At step S202, the network device receives, according to the predefined rule, the TBoMS PUSCH sent by the terminal.

In some embodiments, the TBoMS PUSCH is sent by the terminal.

In some embodiments, the predefined rule is used to indicate the processing manner for the TBoMS PUSCH.

In some embodiments, the TBoMS PUSCH is sent by the terminal based on the TBoMS manner.

In some embodiments, the network device determines, according to the predefined rule, the processing manner for the TBoMS PUSCH when the TBoMS PUSCH conflicts with a broadcast message in a time-domain unit configured with a subband.

In some embodiments, the network device receiving, according to the predefined rule, the TBoMS PUSCH sent by the terminal includes at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, receiving the TBoMS PUSCH in a second time-domain unit,
in which the second time-domain unit is different from the first time-domain unit.

In some embodiments, the network device receiving, according to the predefined rule, the TBoMS PUSCH sent by the terminal includes at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, not expecting to receive the TBoMS PUSCH in the first time-domain unit.

In some embodiments, the predefined rule is used to indicate: in a case where a first frequency-domain resource of the TBoMS PUSCH is not fully located within the UL subband, sending the TBoMS PUSCH in a second frequency-domain resource, in which the second frequency-domain resource is fully located within the UL subband.

In some embodiments, the network device receiving, according to the predefined rule, the TBoMS PUSCH sent by the terminal includes at least one of:
in a case where the first frequency-domain resource of the TBoMS PUSCH is not fully located within the UL subband, determining the second frequency-domain resource within the UL subband; and
receiving the TBoMS PUSCH in the second frequency-domain resource.

In some embodiments, the network device determining the second frequency-domain resource within the UL subband includes: determining, within the UL subband, a frequency-domain resource with a continuous first frequency-domain range starting from a first frequency-domain position as the second frequency-domain resource, in which the first frequency-domain range is determined based on the first frequency-domain resource.

In some embodiments, the network device receiving, according to the predefined rule, the TBoMS PUSCH sent by the terminal includes at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, receiving the TBoMS PUSCH in a second time-domain unit,
in which the second time-domain unit is different from the first time-domain unit.

In some embodiments, the network device receiving, according to the predefined rule, the TBoMS PUSCH sent by the terminal includes at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, not expecting to receive the TBoMS PUSCH in the first time-domain unit.

In some embodiments, before the network device determines the second frequency-domain resource within the UL subband, the network device may first determine a relationship between the frequency-domain range of the first frequency-domain resource and the frequency-domain range of the UL subband.

In some embodiments, when the frequency-domain range of the first frequency-domain resource is greater than the frequency-domain range of the UL subband, the network device cannot determine sufficient frequency-domain resources for sending the TBoMS PUSCH within the UL subband, and thus does not need to determine the second frequency-domain resource within the UL subband, which helps avoid a waste of the network device's resources. When the frequency-domain range of the first frequency-domain resource is less than or equal to the frequency-domain range of the UL subband, the network device may determine sufficient frequency-domain resources for receiving the TBoMS PUSCH within the UL subband, and only then determines the second frequency-domain resource within the UL subband.

In some embodiments, the predefined rule is used to indicate: in a case where a first frequency-domain interval between the UL subband and/or the TBoMS PUSCH and the broadcast message is greater than or equal to a frequency-domain interval threshold, sending the TBoMS PUSCH in the time-domain unit.

In some embodiments, the network device receiving, according to the predefined rule, the TBoMS PUSCH sent by the terminal includes at least one of:
in a case where the first frequency-domain interval between the UL subband and the broadcast message is greater than or equal to the frequency-domain interval threshold, receiving the TBoMS PUSCH in the first time-domain unit;
in a case where the first frequency-domain interval between the UL subband and the broadcast message is less than the frequency-domain interval threshold, not expecting to receive the TBoMS PUSCH in the first time-domain unit;
in a case where the first frequency-domain interval between the TBoMS PUSCH and the broadcast message is greater than or equal to the frequency-domain interval threshold, receiving the TBoMS PUSCH in the first time-domain unit; or
in a case where the first frequency-domain interval between the TBoMS PUSCH and the broadcast message is less than the frequency-domain interval threshold, not expecting to receive the TBoMS PUSCH in the first time-domain unit;
in which the second time-domain unit is different from the first time-domain unit.

In some embodiments, the network device receiving, according to the predefined rule, the TBoMS PUSCH sent by the terminal includes at least one of:
in a case where the first frequency-domain interval between the UL subband and the broadcast message is greater than or equal to the frequency-domain interval threshold, receiving the TBoMS PUSCH in the first time-domain unit;
in a case where the first frequency-domain interval between the UL subband and the broadcast message is less than the frequency-domain interval threshold, not expecting to receive the TBoMS PUSCH in the first time-domain unit;
in a case where the first frequency-domain interval between the TBoMS PUSCH and the broadcast message is greater than or equal to the frequency-domain interval threshold, receiving the TBoMS PUSCH in the first time-domain unit; or
in a case where the first frequency-domain interval between the TBoMS PUSCH and the broadcast message is less than the frequency-domain interval threshold, not expecting to receive the TBoMS PUSCH in the first time-domain unit.

In some embodiments, the second time-domain unit is not configured with a subband.

In some embodiments, the network device may determine, according to the predefined rule, the first frequency-domain interval between the first frequency-domain resource corresponding to the TBoMS PUSCH and the broadcast message in the conflicting time-domain unit.

For example, when the first frequency-domain interval is less than the frequency-domain interval threshold, the network device does not expect to receive the TBoMS PUSCH in the conflicting time-domain unit.

For example, when the first frequency-domain interval is greater than or equal to the frequency-domain interval threshold, the network device may receive the TBoMS PUSCH in the conflicting time-domain unit.

In some embodiments, the network device may determine the first frequency-domain interval between the UL subband and the broadcast message in the conflicting time-domain unit according to the predefined rule.

For example, when the first frequency-domain interval is less than the frequency-domain interval threshold, the network device does not expect to receive the TBoMS PUSCH in the conflicting time-domain unit.

For example, when the first frequency-domain interval is greater than or equal to the frequency-domain interval threshold, the network device may receive the TBoMS PUSCH in the conflicting time-domain unit.

The method for uplink communication processing involved in the embodiments of the disclosure may include at least one of steps S201 to S202. For example, step S201 may be implemented as an independent embodiment, step S202 may be implemented as an independent embodiment, and steps S201+S202 may be implemented as an independent embodiment, but is not limited thereto.

In some embodiments, steps S201 and S202 may be exchanged in order or executed simultaneously.

In some embodiments, reference may be made to other implementations described before or after the specification corresponding to FIG. 2.

According to the first aspect of the embodiments of the disclosure, the method for uplink communication processing is provided. FIG. 3 is a schematic flowchart of a method for uplink communication processing according to an embodiment of the disclosure. For example, the method for uplink communication processing shown in this embodiment may be executed by a terminal. As shown in FIG. 3, the method for uplink communication processing may include the following steps.

At step S301, a TBoMS PUSCH is sent according to a predefined rule, in which the TBoMS PUSCH conflicts with a broadcast message in a first time-domain unit (e.g., an SBFD time-domain unit), and the first time-domain unit is configured with a subband. For example, the predefined rule may be determined according to a protocol convention.

It should be noted that the embodiment shown in FIG. 3 may be implemented independently or in combination with at least one other embodiment of the disclosure. The specific implementation may be selected as needed, and the disclosure is not limited thereto.

In some embodiments, when the TBoMS PUSCH conflicts with the broadcast message of the network device in a certain time-domain unit, the terminal may do not expect to send the TBoMS PUSCH in that time-domain unit.

However, when the TBoMS PUSCH conflicts with the broadcast message in the time-domain unit configured with the subband (hereinafter referred to as the SBFD time-domain unit), since the subband is configured in the SBFD time-domain unit, the terminal may perform both uplink communication and downlink communication in the SBFD time-domain unit. If the above implementation manner is still adopted (i.e., not expecting to send the TBoMS PUSCH in that time-domain unit), it is difficult to apply the TBoMS technology in the SBFD time-domain unit, which limits the uplink coverage gain brought by the SBFD technology.

In some embodiments, a conflict includes at least one of: determining that a conflict is occurring; or predicting that a conflict will occur in a future time-domain unit.

According to the embodiments of the disclosure, when the terminal determines that the TBoMS PUSCH conflicts with the broadcast message in the SBFD time-domain unit, the terminal may not default to not expecting to send the TBoMS PUSCH in the SBFD time-domain unit, but may determine the processing manner for the TBoMS PUSCH according to the predefined rule. For example, the terminal may send the TBoMS PUSCH in the SBFD time-domain unit, or may not send the TBoMS PUSCH in the SBFD time-domain unit. Accordingly, in some SBFD time-domain units, the TBoMS technology may still be applied even if the TBoMS PUSCH conflicts with the broadcast message, which helps ensure the uplink coverage gain brought by sending the TBoMS PUSCH in an SBFD slot.

In some embodiments, the broadcast message include at least one of: an SSB or a CSS. For example, the SSB may also be referred to as a synchronization broadcast signal block, and PBCH stands for physical broadcast channel. For example, the CSS includes but is not limited to Type-0 PDCCH CSS, where PDCCH stands for physical downlink control channel.

The following embodiments mainly take broadcast messages including the SSB as an example to exemplarily illustrate the technical solutions of the disclosure.

In some embodiments, a case where the TBoMS PUSCH conflicts with the broadcast message in the time-domain unit configured with the subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

For example, when the first time-domain resource of the TBoMS PUSCH in the SBFD slot partially overlaps with the second time-domain resource of the SSB in the SBFD slot, the terminal may determine that the TBoMS PUSCH conflicts with the SSB in the SBFD slot, and then determine the processing manner for the TBoMS PUSCH according to the predefined rule.

For example, when the first time-domain resource of the TBoMS PUSCH in the SBFD slot fully overlaps with the second time-domain resource of the SSB in the SBFD slot, the terminal may determine that the TBoMS PUSCH conflicts with the SSB in the SBFD slot, and then determine the processing manner for the TBoMS PUSCH according to the predefined rule.

For example, when the SBFD slot where the TBoMS PUSCH is located is the same as the SBFD slot where the SSB is located, the terminal may determine that the TBoMS PUSCH conflicts with the SSB in this same SBFD slot, and then determine the processing manner for the TBoMS PUSCH according to the predefined rule.

Below, some embodiments are used to exemplarily illustrate that the terminal sends the TBoMS PUSCH according to the predefined rule.

In some embodiments, the predefined rule is used to indicate at least one of: in a case where a first frequency-domain resource of the TBoMS PUSCH is fully located within the UL subband, sending the TBoMS PUSCH in the time-domain unit; or in a case where a first frequency-domain resource of the TBoMS PUSCH is not fully located within the UL subband, not expecting to send the TBoMS PUSCH in the time-domain unit.

In some embodiments, the terminal sending the TBoMS PUSCH according to the predefined rule includes at least one of:
in a case where the first frequency-domain resource of the TBoMS PUSCH is fully located within the UL subband, sending the TBoMS PUSCH in the time-domain unit; or
in a case where the first frequency-domain resource of the TBoMS PUSCH is not fully located within the UL subband, not expecting to send the TBoMS PUSCH in the time-domain unit.

In some embodiments, the terminal may determine, according to the predefined rule, to send the TBoMS PUSCH in the time-domain unit in a case where the first frequency-domain resource of the TBoMS PUSCH is fully located within the UL subband.

The terminal may determine, according to the predefined rule, whether the first frequency-domain resource of the TBoMS PUSCH is fully located within the UL subband in the conflicting time-domain unit. When the first frequency-domain resource of the TBoMS PUSCH is fully located within the UL subband, the terminal may send the TBoMS PUSCH in the conflicting time-domain unit. When the first frequency-domain resource of the TBoMS PUSCH is not fully located within the UL subband, the terminal does not expect to send the TBoMS PUSCH in the conflicting time-domain unit, and correspondingly, the network device does not expect to receive the TBoMS PUSCH in the conflicting time-domain unit.

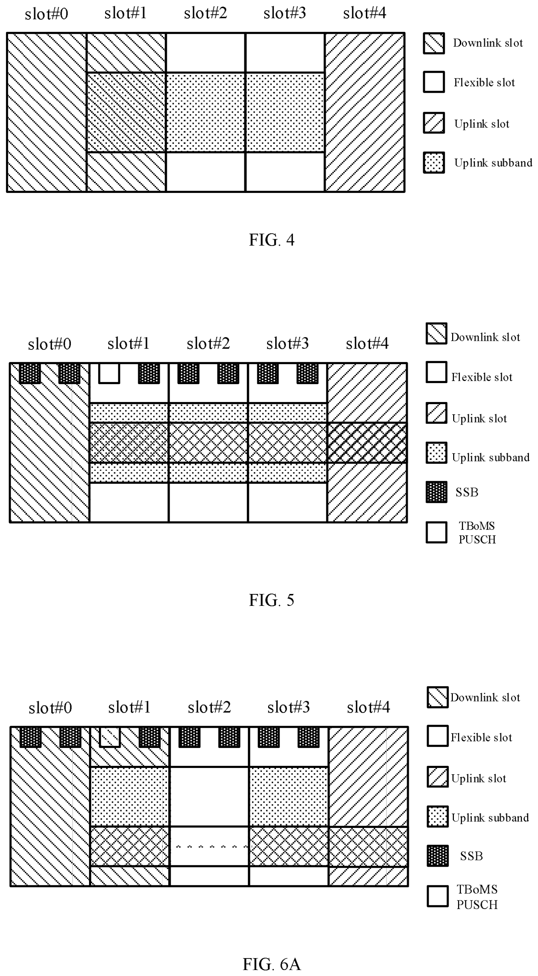

FIG. 4 is a schematic diagram of a subband according to an embodiment of the disclosure.

Take the example where the subband includes a UL subband, the time-domain unit includes a slot, and the network device configures the UL subband for the terminal in a downlink slot.

As shown in FIG. 4, a slot structure configured by the network device for the terminal via a slot format indication (SFI) and/or a time division duplexing (TDD) uplink-downlink (UL-DL) configuration is DDFFU, where D represents a downlink slot, U represents an uplink slot, and F represents a flexible slot. That is, among the 5 slots, slot#0 to slot#1 are downlink slots, slot#2 and slot#3 are flexible slots, and slot#4 is an uplink slot.

In some embodiments, the TDD UL-DL configuration may include a common TDD UL-DL configuration (tdd-UL-DL-ConfigurationCommon), or include a common TDD UL-DL configuration (tdd-UL-DL-ConfigurationCommon) and a dedicated TDD UL-DL configuration (tdd-UL-DL-ConfigurationDedicated).

As shown in FIG. 4, the network device configures a UL subband in slot#1, slot#2, and slot#3. In some embodiments, the UL subband is fully located within an active uplink bandwidth part (active UL BWP).

FIG. 5 is a schematic diagram of a conflict according to an embodiment of the disclosure.

As shown in FIG. 5, for example, an SSB burst includes 8 SSB candidates, and the network device sends an SSB on each SSB candidate. The 8 SSB candidates are distributed in slot#0 to slot#3, with two SSB candidates in each slot.

The terminal sends the TBoMS PUSCH based on a configuration and/or scheduling of the network device. A number of slots n used for sending the TBoMS PUSCH is 4, that is, a TB corresponding to the TBoMS PUSCH is sent over 4 slots, which are slot#1 to slot#4.

Since the network device sends SSBs in slot#1 to slot#3, and the terminal also needs to send the TBoMS PUSCH in the UL subbands of slot#1 to slot#3, in this case, the terminal may determine that there is a conflict between the TBoMS PUSCH and the SSBs in slot#1 to slot#3.

In some embodiments, the predefined rule is used to indicate: in a case where the first frequency-domain resource of the TBoMS PUSCH is fully located within the UL subband, sending the TBoMS PUSCH in the time-domain unit.

In the case of the embodiment shown in FIG. 5, since the first frequency-domain resource of the TBoMS PUSCH is fully located within the UL subband, the terminal may still send the TBoMS PUSCH in the UL subband according to the configuration and/or scheduling of the network device. According to the predefined rule sent by the network device, the terminal may determine to send the TBoMS PUSCH in conflicting time-domain units, namely slot#1 to slot#3. Of course, the TBoMS PUSCH may also be sent in a non-conflicting time-domain unit, namely slot#4.

FIG. 6A is a schematic diagram of a conflict according to another embodiment of the disclosure.

As shown in FIG. 6A, the first frequency-domain resource of the TBoMS PUSCH in slot#1 to slot#3 is not fully located within the UL subband. In this case, the terminal cannot successfully send the TBoMS PUSCH in the UL subband according to the configuration and/or scheduling of the network device.

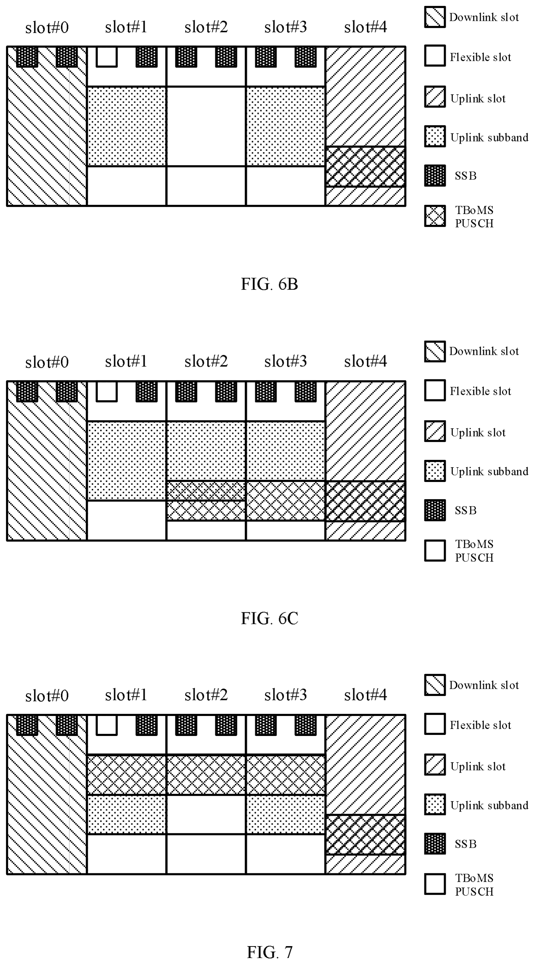

FIG. 6B is a schematic diagram of a processing result according to an embodiment of the disclosure.

In some embodiments, the predefined rule is used to indicate: in a case where the first frequency-domain resource of the TBoMS PUSCH is fully located within the UL subband, sending the TBoMS PUSCH in the time-domain unit.

In a case of the embodiment shown in FIG. 6A, since the first frequency-domain resource of the TBoMS PUSCH is not fully located within the UL subband, the terminal cannot successfully send the TBoMS PUSCH in conflicting slots according to the configuration and/or scheduling of the network device. Then, as shown in FIG. 6B, according to the predefined rule sent by the network device, the terminal may determine not to send the TBoMS PUSCH in the conflicting time-domain units (e.g., slot#1 to slot#3) and only send the TBoMS PUSCH in slot#4.

In some embodiments, since the terminal sends the TBoMS PUSCH in 3 fewer slots, it is necessary to determine 3 available slots after slot#4 to send the TBoMS PUSCH to ensure that the number of slots for the TBoMS PUSCH is 4.

FIG. 6C is a schematic diagram of a processing result according to another embodiment of the disclosure.

In some embodiments, the predefined rule is used to indicate: in a case where the first frequency-domain resource of the TBoMS PUSCH is fully located within the UL subband, sending the TBoMS PUSCH in the time-domain unit.

In the case of the embodiment shown in FIG. 6A, since the first frequency-domain resource of the TBoMS PUSCH is not fully located within the UL subband, the terminal cannot successfully send the TBoMS PUSCH in the downlink time-domain unit (e.g., slot#1) configured with the subband according to the configuration and/or scheduling of the network device. However, in the flexible time-domain unit (e.g., slot#2) configured with the subband, the terminal may still successfully send the TBoMS PUSCH according to the configuration and/or scheduling of the network device (e.g., a frequency-domain resource corresponding to a flexible slot is scheduled as an uplink frequency-domain resource). Then, as shown in FIG. 6C, the terminal may determine not to send the TBoMS PUSCH in the downlink time-domain unit (e.g., slot#1) configured with the subband among the conflicting time-domain units, but may send the TBoMS PUSCH in the flexible time-domain unit (e.g., slot#2 and slot#3) configured with the subband among the conflicting time-domain units. Of course, the TBoMS PUSCH may also be sent in slot#4.

In some embodiments, since the terminal sends the TBoMS PUSCH in 1 fewer slot, it is necessary to determine 1 available slot after slot#4 to send the TBoMS PUSCH to ensure that the number of slots for the TBoMS PUSCH is 4.

In some embodiments, when the first frequency-domain resource of the TBoMS PUSCH is not fully located within the UL subband, whether to send the TBoMS PUSCH in the flexible time-domain unit configured with the subband among the conflicting time-domain unit (e.g., in the case of FIG. 6A, processing according to the example in FIG. 6B or FIG. 6C) may be indicated by the network device or determined according to a protocol convention.

In some embodiments, the predefined rule is used to indicate at least one of: in a case where the first frequency-domain resource of the TBoMS PUSCH is fully located within the UL subband, sending the TBoMS PUSCH in the first time-domain unit; or in a case where the first frequency-domain resource of the TBoMS PUSCH is not fully located within the UL subband, sending the TBoMS PUSCH in a second time-domain unit.

In some embodiments, the terminal sending the TBoMS PUSCH according to the predefined rule includes at least one of: in a case where the first frequency-domain resource of the TBoMS PUSCH is fully located within the UL subband, sending the TBoMS PUSCH in the first time-domain unit; or in a case where the first frequency-domain resource of the TBoMS PUSCH is not fully located within the UL subband, sending the TBoMS PUSCH in the second time-domain unit, in which the second time-domain unit is different from the first time-domain unit.

For example, the second time-domain unit includes one or more nearest available time-domain units (e.g., one or more time-domain units that do not conflict with the broadcast message and have an uplink frequency-domain resource). The second time-domain unit may also include one or more time-domain units where no conflict occurs among the time-domain units used for sending the TBoMS PUSCH.

For example, when sending the TBoMS PUSCH in the manner of the embodiment shown in FIG. 6B, only the 5th slot in one period may be used for sending the TBoMS PUSCH. Since 3 fewer slots are used for sending the TBoMS PUSCH, the nearest 3 available slots after the one period are the 5th slot of each of the next 3 periods. Then, the 5th slots of each of the next 3 periods after the one period may be used as the second time-domain unit for sending the TBoMS PUSCH, thereby meeting the requirement of sending the TBoMS PUSCH over 4 slots.

For example, when sending the TBoMS PUSCH in the manner of the embodiment shown in FIG. 6C, the 3rd to 5th slots in one period may all be used for sending the TBoMS PUSCH. Since 1 fewer slot is used for sending the TBoMS PUSCH, the nearest available slot after the one period may be determined as the 3rd slot of the next period. Then, the 3rd slot of the next period may be used as the second time-domain unit for sending the TBoMS PUSCH, thereby meeting the requirement of sending the TBoMS PUSCH over 4 slots. Correspondingly, the network device receives the TBoMS PUSCH sent by the terminal in the 3rd slot of the next period.

In some embodiments, the predefined rule is used to indicate that: in a case where the first frequency-domain resource of the TBoMS PUSCH is not fully located within the UL subband, the TBoMS PUSCH is sent in a second frequency-domain resource, in which the second frequency-domain resource is fully located within the UL subband.

In some embodiments, the terminal sending the TBoMS PUSCH according to the predefined rule includes:
in the case where the first frequency-domain resource of the TBoMS PUSCH is not fully located within the UL subband, determining the second frequency-domain resource within the UL subband; and
sending the TBoMS PUSCH in the second frequency-domain resource.

In some embodiments, the predefined rule may indicate the terminal, in a case where the first frequency-domain resource of the TBoMS PUSCH is not fully located within the UL subband, to send the TBoMS PUSCH in the second frequency-domain resource, in which the second frequency-domain resource is fully located within the UL subband.

According to the predefined rule, the terminal may first determine whether the first frequency-domain resource of the TBoMS PUSCH is fully located within the UL subband in the conflicting time-domain unit. When it is determined that the first frequency-domain resource of the TBoMS PUSCH is fully located within the UL subband, the terminal may determine the second frequency-domain resource within the UL subband, and then send the TBoMS PUSCH in the second frequency-domain resource. Correspondingly, the network device may receive the TBoMS PUSCH in the second frequency-domain resource within the conflicting time-domain unit. Accordingly, it may be ensured that the terminal may successfully send the TBoMS PUSCH in the UL subband in the conflicting time-domain unit, which helps reduce a transmission delay of the TBoMS PUSCH.

In some embodiments, the predefined rule is used to indicate at least one of: in a case where a frequency-domain range of the first frequency-domain resource is less than or equal to a frequency-domain range of the UL subband, sending the TBoMS PUSCH in the first time-domain unit; or in a case where a frequency-domain range of the first frequency-domain resource is greater than a frequency-domain range of the UL subband, sending the TBoMS PUSCH in the second time-domain unit.

In some embodiments, the terminal sending the TBoMS PUSCH according to the predefined rule includes at least one of: in a case where the frequency-domain range of the first frequency-domain resource is less than or equal to the frequency-domain range of the UL subband, sending the TBoMS PUSCH in the first time-domain unit; or in a case where the frequency-domain range of the first frequency-domain resource is greater than the frequency-domain range of the UL subband, sending the TBoMS PUSCH in the second time-domain unit, in which the second time-domain unit is different from the first time-domain unit.

Before the terminal determines the second frequency-domain resource within the UL subband, the terminal may first determine a relationship between the frequency-domain range of the first frequency-domain resource and the frequency-domain range of the UL subband. When it is determined that the frequency-domain range of the first frequency-domain resource is greater than the frequency-domain range of the UL subband, the terminal cannot determine sufficient frequency-domain resources for sending the TBoMS PUSCH within the UL subband. Thus, the terminal does not need to determine the second frequency-domain resource within the UL subband, nor does it need to send the TBoMS PUSCH in the first time-domain unit, but instead determines the second time-domain unit for sending the TBoMS PUSCH. When it is determined that the frequency-domain range of the first frequency-domain resource is less than or equal to the frequency-domain range of the UL subband, the terminal may determine sufficient frequency-domain resources for sending the TBoMS PUSCH within the UL subband, and only then determines the second frequency-domain resource within the UL subband.

For the manner of determining the second time-domain unit, reference may be made to the previous embodiments, which is not repeated in this embodiment.

In some embodiments, the predefined rule is used to indicate at least one of: in a case where a frequency-domain range of the first frequency-domain resource is less than or equal to a frequency-domain range of the UL subband, sending the TBoMS PUSCH in the first time-domain unit; or in a case where a frequency-domain range of the first frequency-domain resource is greater than a frequency-domain range of the UL subband, not expecting to send the TBoMS PUSCH in the first time-domain unit.

**In** some embodiments, the terminal sending the TBoMS PUSCH according to the predefined rule includes at least one of: in a case where the frequency-domain range of the first frequency-domain resource is less than or equal to the frequency-domain range of the UL subband, sending the TBoMS PUSCH in the first time-domain unit; or in a case where the frequency-domain range of the first frequency-domain resource is greater than the frequency-domain range of the UL subband, not expecting to send the TBoMS PUSCH in the first time-domain unit.

Before the terminal determines the second frequency-domain resource within the UL subband, the terminal may first determine the relationship between the frequency-domain range of the first frequency-domain resource and the frequency-domain range of the UL subband. When it is determined that the frequency-domain range of the first frequency-domain resource is greater than the frequency-domain range of the UL subband, the terminal cannot determine sufficient frequency-domain resources for sending the TBoMS PUSCH within the UL subband. Thus, the terminal does not need to determine the second frequency-domain resource within the UL subband, nor does it need to send the TBoMS PUSCH in the first time-domain unit, but instead determines the second time-domain unit for sending the TBoMS PUSCH. When it is determined that the frequency-domain range of the first frequency-domain resource is less than or equal to the frequency-domain range of the UL subband, the terminal may determine sufficient frequency-domain resources for sending the TBoMS PUSCH within the UL subband, and only then determines the second frequency-domain resource within the UL subband.

In some embodiments, determining the second frequency-domain resource within the UL subband includes:
determining, within the UL subband, a frequency-domain resource with a continuous first frequency-domain range starting from a first frequency-domain position as the second frequency-domain resource, in which the first frequency-domain range is determined based on the first frequency-domain resource.

The terminal determines the second frequency-domain resource within the UL subband by determining a start point and a duration of the second frequency-domain resource. The start point may be the first frequency-domain position within the UL subband. For example, the first frequency-domain position may be configured or indicated by the network device, or determined according to a protocol convention. For example, the first frequency-domain position may be a start point or an end point of the frequency-domain resource corresponding to the UL subband. The duration of the second frequency-domain resource may be the first frequency-domain range, and the first frequency-domain range may be determined based on the first frequency-domain resource of the TBoMS PUSCH in the SBFD time-domain unit. For example, the first frequency-domain range may be the same as a frequency-domain range corresponding to the first frequency-domain resource.

FIG. 7 is a schematic diagram of a processing result according to an embodiment of the disclosure.

In some embodiments, the predefined rule is used to indicate: in a case where the first frequency-domain resource of the TBoMS PUSCH is not fully located within the UL subband, sending the TBoMS PUSCH in the second frequency-domain resource, in which the second frequency-domain resource is fully located within the UL subband.

In the case of the embodiment shown in FIG. 6A, since the first frequency-domain resource of the TBoMS PUSCH is not fully located within the UL subband, the terminal cannot successfully send the TBoMS PUSCH in the conflicting slot according to the configuration and/or scheduling of the network device. Then, as shown in FIG. 7, according to the predefined rule sent by the network device, the terminal may determine the second frequency-domain resource within the UL subbands of the conflicting time-domain units (e.g., slot#1 to slot#3), where the start point of the second frequency-domain resource is the start point of the frequency-domain resource corresponding to the UL subband, and the first frequency-domain range is the same as the frequency-domain range corresponding to the first frequency-domain resource. Then the terminal may send the TBoMS PUSCH in the second frequency-domain resource.

For example, the frequency-domain range corresponding to the UL subband is resource block (RB) #20 to RB#40, while the first frequency-domain resource corresponding to the TBoMS PUSCH is RB#35 to RB#45. The terminal may determine that the first frequency-domain resource is not fully located within the UL subband, and the frequency-domain range of the first frequency-domain resource is smaller than frequency-domain range of the UL subband. Then, the terminal may determine the second frequency-domain resource (RB#20 to RB#30) within RB#20 to RB#40, with the start point at RB#20 and the duration of 10 RBs. Then the terminal may send the TBoMS PUSCH in RB#20 to RB#30 during slot#1 to slot#3. Correspondingly, the network device may receive the TBoMS PUSCH sent by the terminal in RB#20 to RB#30 during slot#1 to slot#3, and still receive the TBoMS PUSCH sent by the terminal in RB#20 to RB#30 during slot#4.

In some embodiments, the predefined rule is used to indicate at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the terminal sending the TBoMS PUSCH according to the predefined rule includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

The second time-domain unit is different from the first time-domain unit

For example, the terminal may determine, according to predefined rule, the first frequency-domain interval between the broadcast message and the first frequency-domain resource corresponding to the TBoMS PUSCH in the conflicting time-domain unit.

When the first frequency-domain interval is less than the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast message is relatively significant, which has a relatively large impact on communication quality. Therefore, the terminal may determine the second time-domain unit and send the TBoMS PUSCH in the second time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast messages is relatively small, which has a relatively small impact on communication quality. Therefore, the terminal may send the TBoMS PUSCH in the conflicting time-domain unit.

For example, the terminal may determine the first frequency-domain interval between the UL subband and the broadcast message in the conflicting time-domain unit according to the predefined rule.

When the first frequency-domain interval is less than the frequency-domain interval threshold, the network device sends the broadcast message in the conflicting time-domain unit, and receives the TBoMS PUSCH and sends the broadcast message in the UL subband of the conflicting time-domain unit. The inter-frequency interference between the TBoMS PUSCH and the broadcast messages is relatively significant, which has a relatively large impact on communication quality. Therefore, the terminal may determine the second time-domain unit and send the TBoMS PUSCH in the second time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in the UL subband of the conflicting time-domain unit. The inter-frequency interference between the TBoMS PUSCH and the broadcast messages is relatively small, which has a relatively small impact on communication quality. Therefore, the terminal may send the TBoMS PUSCH in the conflicting time-domain unit.

For the manner of determining the second time-domain unit, reference may be made to the previous embodiments, which is not repeated in this embodiment.

In some embodiments, the predefined rule is used to indicate at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the terminal sending the TBoMS PUSCH according to the predefined rule includes at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

For example, the terminal may determine, according to predefined rule, the first frequency-domain interval between the broadcast message and the first frequency-domain resource corresponding to the TBoMS PUSCH in the conflicting time-domain unit.

When the first frequency-domain interval is less than the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast message is relatively significant, which has a relatively large impact on communication quality. Therefore, the terminal does not expect to send the TBoMS PUSCH in the conflicting time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast messages is relatively small, which has a relatively small impact on communication quality. Therefore, the terminal may send the TBoMS PUSCH in the conflicting time-domain unit.

For example, the terminal may determine the first frequency-domain interval between the UL subband and the broadcast message in the conflicting time-domain unit according to the predefined rule.

When the first frequency-domain interval is less than the frequency-domain interval threshold, the network device sends the broadcast message in the conflicting time-domain unit, and receives the TBoMS PUSCH and sends the broadcast message in the UL subband of the conflicting time-domain unit. The inter-frequency interference between the TBoMS PUSCH and the broadcast messages is relatively significant, which has a relatively large impact on communication quality. Therefore, the terminal does not expect to send the TBoMS PUSCH in the conflicting time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in the UL subband of the conflicting time-domain unit. The inter-frequency interference between the TBoMS PUSCH and the broadcast messages is relatively small, which has a relatively small impact on communication quality. Therefore, the terminal may send the TBoMS PUSCH in the conflicting time-domain unit.

In some embodiments, since a number of time-domain units occupied by the TBoMS PUSCH is fixed, when the terminal does not expect to send the TBoMS PUSCH in the conflicting time-domain units, it may determine one or more nearest available time-domain units (e.g., one or more time-domain units that do not conflict with the broadcast message and have an uplink frequency-domain resource) for sending the TBoMS PUSCH, so as to make up for the number of time-domain units occupied by the TBoMS PUSCH.

For example, the number of time-domain units occupied by the TBoMS PUSCH is n. When the terminal does not expect to send the TBoMS PUSCH in m conflicting time-domain units (e.g., m is an integer less than or equal to n) within a current TDD period, the terminal needs to determine m nearest available time-domain units after the current TDD period to send the TBoMS PUSCH, so as to ensure that the number of time-domain units occupied by the TBoMS PUSCH is n. Correspondingly, the network device does not expect to receive the TBoMS PUSCH sent by the terminal in the m conflicting time-domain units, but receives the TBoMS PUSCH sent by the terminal in the m determined nearest available time-domain units after the current TDD period.

For example, in the embodiment shown in FIG. 6A, one TDD period includes 5 slots.

When sending the TBoMS PUSCH in the manner of the embodiment shown in FIG. 6B, only the 5th slot in one period may be used for sending the TBoMS PUSCH. Since 3 fewer slots are used for sending the TBoMS PUSCH, the nearest 3 available slots after the one period are the 5th slot of each of the next 3 periods. Then, the TBoMS PUSCH may be sent in the 5th slot of each of the next 3 periods after the one period, thereby meeting the requirement of sending the TBoMS PUSCH over 4 slots. Correspondingly, the network device receives the TBoMS PUSCH sent by the terminal in the 5th slot of each of the next 3 periods after the one period.

When sending the TBoMS PUSCH in the manner of the embodiment shown in FIG. 6C, the 3rd to 5th slots in one period may all be used for sending the TBoMS PUSCH. Since 1 fewer slot is used for sending the TBoMS PUSCH, the nearest available slot after the one period may be determined as the 3rd slot of the next period. Then, the TBoMS PUSCH may be sent in the 3rd slot of the next period, thereby meeting the requirement of sending the TBoMS PUSCH over 4 slots. Correspondingly, the network device receives the TBoMS PUSCH sent by the terminal in the 3rd slot of the next period.

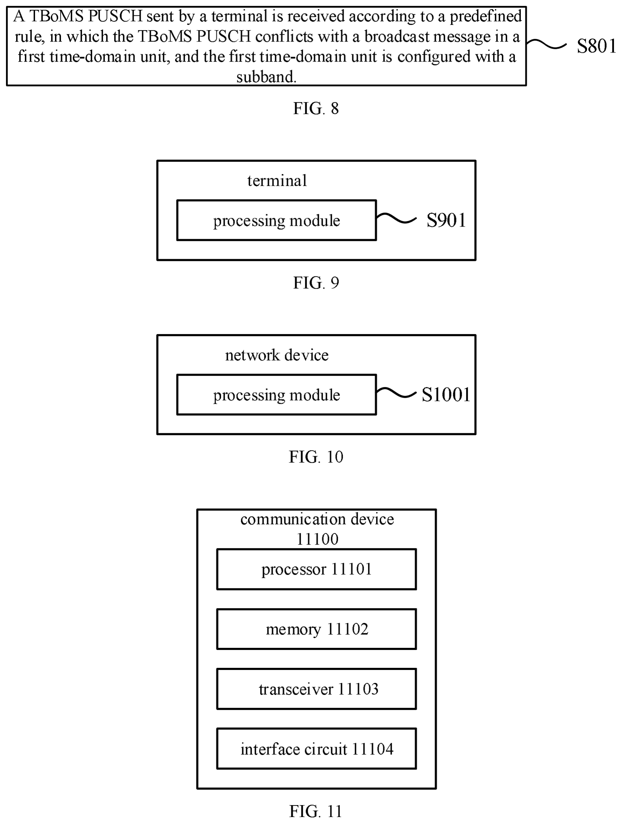

According to the second aspect of the embodiments of the disclosure, the method for uplink communication processing is provided. FIG. 8 is a schematic flowchart of a method for uplink communication processing according to an embodiment of the disclosure. For example, the method for uplink communication processing shown in this embodiment may be executed by a network device. As shown in FIG. 8, the method for uplink communication processing may include the following steps.

**At** step S801, a TBoMS PUSCH sent by a terminal is received according to a predefined rule, in which the TBoMS PUSCH conflicts with a broadcast message in a first time-domain unit, and the first time-domain unit is configured with a subband. For example, the predefined rule may be determined according to a protocol convention.

It should be noted that the embodiment shown in FIG. 8 may be implemented independently or in combination with at least one other embodiment of the disclosure. The specific implementation may be selected as needed, and the disclosure is not limited thereto.

**In** some embodiments, when the TBoMS PUSCH conflicts with the broadcast message of the network device in a certain time-domain unit, the terminal may do not expect to send the TBoMS PUSCH in that time-domain unit.

However, when the TBoMS PUSCH conflicts with the broadcast message in the time-domain unit configured with the subband (hereinafter referred to as the SBFD time-domain unit), since the subband is configured in the SBFD time-domain unit, the terminal may perform both uplink communication and downlink communication in the SBFD time-domain unit. If the above implementation manner is still adopted (i.e., not expecting to send the TBoMS PUSCH in that time-domain unit), it is difficult to apply the TBoMS technology in the SBFD time-domain unit, which limits the uplink coverage gain brought by the SBFD technology.

**In** some embodiments, a conflict includes at least one of: determining that a conflict is occurring; or predicting that a conflict will occur in a future time-domain unit.

According to an embodiment of the disclosure, the network device may determine, according to the predefined rule, the processing manner for the TBoMS PUSCH when the TBoMS PUSCH conflicts with the broadcast message in an SBFD time-domain unit. Accordingly, the network device may not default to not expecting to receive the TBoMS PUSCH sent by the terminal in the SBFD time-domain unit, but may determine the processing manner for the TBoMS PUSCH based on the predefined rule. For example, the network device may receive the TBoMS PUSCH sent by the terminal in the SBFD time-domain unit, or may not expect to receive the TBoMS PUSCH sent by the terminal in the SBFD time-domain unit. Thus, in some SBFD time-domain units, even if the TBoMS PUSCH conflicts with the broadcast message, the TBoMS technology may still be applied, which helps ensure the uplink coverage gain brought by receiving the TBoMS PUSCH in an SBFD slot.

In some embodiments, the broadcast message include at least one of: an SSB or a CSS. For example, the SSB may also be referred to as a synchronization broadcast signal block. For example, the CSS includes but is not limited to Type-0 PDCCH CSS.

In some embodiments, a case where the TBoMS PUSCH conflicts with the broadcast message in the time-domain unit configured with the subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

For example, when the first time-domain resource of the TBoMS PUSCH in the SBFD slot partially overlaps with the second time-domain resource of the SSB in the SBFD slot, the network device may determine that the TBoMS PUSCH conflicts with the SSB in the SBFD slot, and then determine the processing manner for the TBoMS PUSCH according to the predefined rule.

For example, when the first time-domain resource of the TBoMS PUSCH in the SBFD slot fully overlaps with the second time-domain resource of the SSB in the SBFD slot, the network device may determine that the TBoMS PUSCH conflicts with the SSB in the SBFD slot, and then determine the processing manner for the TBoMS PUSCH according to the predefined rule.

For example, when the SBFD slot where the TBoMS PUSCH is located is the same as the SBFD slot where the SSB is located, the network device may determine that the TBoMS PUSCH conflicts with the SSB in this same SBFD slot, and then determine the processing manner for the TBoMS PUSCH according to the predefined rule.

In some embodiments, the predefined rule is used to indicate at least one of: in a case where a first frequency-domain resource of the TBoMS PUSCH is fully located within the UL subband, receiving the TBoMS PUSCH in the time-domain unit; or in a case where a first frequency-domain resource of the TBoMS PUSCH is not fully located within the UL subband, not expecting to receive the TBoMS PUSCH in the time-domain unit.

In some embodiments, receiving the TBoMS PUSCH according to the predefined rule includes at least one of:
in a case where the first frequency-domain resource of the TBoMS PUSCH is fully located within the UL subband, receiving the TBoMS PUSCH in first time-domain unit; or
in a case where the first frequency-domain resource of the TBoMS PUSCH is not fully located within the UL subband, not expecting to receive the TBoMS PUSCH in the time-domain unit.

In some embodiments, the network device may determine, according to the predefined rule, to receive the TBoMS PUSCH in the time-domain unit in a case where the first frequency-domain resource of the TBoMS PUSCH is fully located within the UL subband.

The network device may determine, according to the predefined rule, whether the first frequency-domain resource of the TBoMS PUSCH is fully located within the UL subband in the conflicting time-domain unit. When the first frequency-domain resource of the TBoMS PUSCH is fully located within the UL subband, the network device may receive the TBoMS PUSCH sent by the terminal in the conflicting time-domain unit. When the first frequency-domain resource of the TBoMS PUSCH is not fully located within the UL subband, the network device does not expect to receive the TBoMS PUSCH sent by the terminal in the conflicting time-domain unit, and correspondingly, the terminal does not expect to send the TBoMS PUSCH in the conflicting time-domain unit.

As shown in FIG. 5, for example, an SSB burst includes 8 SSB candidates, and the network device sends an SSB on each SSB candidate. The 8 SSB candidates are distributed in slot#0 to slot#3, with two SSB candidates in each slot.

The terminal sends the TBoMS PUSCH based on a configuration and/or scheduling of the network device. A number of slots n used for sending the TBoMS PUSCH is 4, that is, a TB corresponding to the TBoMS PUSCH is sent over 4 slots, which are slot#1 to slot#4.

Since the network device sends SSBs in slot#1 to slot#3, and the network device also needs to receive the TBoMS PUSCH in the UL subbands of slot#1 to slot#3, in this case, the network device may determine that there is a conflict between the TBoMS PUSCH and the SSBs in slot#1 to slot#3.

In some embodiments, the predefined rule is used to indicate: in a case where the first frequency-domain resource of the TBoMS PUSCH is fully located within the UL subband, receiving the TBoMS PUSCH in the time-domain unit.

In the case of the embodiment shown in FIG. 5, since the first frequency-domain resource of the TBoMS PUSCH is fully located within the UL subband, the network device may still receive the TBoMS PUSCH sent by the terminal in the UL subband according to the configuration and/or scheduling for the terminal. According to the predefined rule, the network device may determine to receive the TBoMS PUSCH sent by the terminal in conflicting time-domain units, namely slot#1 to slot#3. Of course, the TBoMS PUSCH sent by the terminal may also be received in a non-conflicting time-domain unit, namely slot#4. Correspondingly, the terminal may send the TBoMS PUSCH in slot#1 to slot#4.

In a case of the embodiment shown in FIG. 6A, since the first frequency-domain resource of the TBoMS PUSCH is not fully located within the UL subband, the network device cannot successfully receive the TBoMS PUSCH sent by the terminal in conflicting slots according to the configuration and/or scheduling for the terminal. Then, as shown in FIG. 6B, according to the predefined rule, the network device may determine not to receive the TBoMS PUSCH sent by the terminal in the conflicting time-domain units (e.g., slot#1 to slot#3) and only receive the TBoMS PUSCH sent by the terminal in slot#4. Correspondingly, the terminal may also not expect to send the TBoMS PUSCH in slot#1 to slot#3, while send the TBoMS PUSCH in slot#4.

In some embodiments, since the TBoMS PUSCH is received in 3 fewer slots, the network device needs to determine 3 available slots after slot#4 to receive the TBoMS PUSCH to ensure that the number of slots for the TBoMS PUSCH is 4. Correspondingly, the terminal may also send the TBoMS PUSCH in the 3 available slots after slot #4.

In the case of the embodiment shown in FIG. 6A, since the first frequency-domain resource of the TBoMS PUSCH is not fully located within the UL subband, the network device cannot successfully receive the TBoMS PUSCH sent by the terminal in the downlink time-domain unit (e.g., slot#1) configured with the subband according to the configuration and/or scheduling for the terminal. However, in the flexible time-domain unit (e.g., slot#2) configured with the subband, the network device may still successfully receive the TBoMS PUSCH sent by the terminal according to the configuration and/or scheduling for the terminal (e.g., a frequency-domain resource corresponding to a flexible slot is scheduled as an uplink frequency-domain resource). Then, as shown in FIG. 6C, the network device may determine not to receive the TBoMS PUSCH sent by the terminal in the downlink time-domain unit (e.g., slot#1) configured with the subband among the conflicting time-domain units, but may receive the TBoMS PUSCH sent by the terminal in the flexible time-domain unit (e.g., slot#2 and slot#3) configured with the subband among the conflicting time-domain units. Of course, the TBoMS PUSCH sent by the terminal may also be received in slot#4. Correspondingly, the terminal may also not expect to send the TBoMS PUSCH in slot #1, while send the TBoMS PUSCH in slot #2 to slot#4.

In some embodiments, since the TBoMS PUSCH is received in 1 fewer slots, the network device needs to determine 1 available slots after slot#4 to receive the TBoMS PUSCH to ensure that the number of slots for the TBoMS PUSCH is 4. Correspondingly, the terminal may also send the TBoMS PUSCH in the 1 available slots after slot #4.

In some embodiments, when the first frequency-domain resource of the TBoMS PUSCH is not fully located within the UL subband, whether to send the TBoMS PUSCH in the flexible time-domain unit configured with the subband among the conflicting time-domain unit (e.g., in the case of FIG. 6A, processing according to the example in FIG. 6B or FIG. 6C) may be determined and indicated to the terminal by the network device, or may be determined according to a protocol convention.

In some embodiments, the predefined rule is used to indicate at least one of: in a case where the first frequency-domain resource of the TBoMS PUSCH is fully located within the UL subband, receiving the TBoMS PUSCH in the first time-domain unit; or in a case where the first frequency-domain resource of the TBoMS PUSCH is not fully located within the UL subband, receiving the TBoMS PUSCH in a second time-domain unit.

**In** some embodiments, the network device receiving the TBoMS PUSCH according to the predefined rule includes at least one of: in a case where the first frequency-domain resource of the TBoMS PUSCH is fully located within the UL subband, receiving the TBoMS PUSCH in the first time-domain unit; or in a case where the first frequency-domain resource of the TBoMS PUSCH is not fully located within the UL subband, receiving the TBoMS PUSCH in a second time-domain unit, in which the second time-domain unit is different from the first time-domain unit.

**For** example, the second time-domain unit includes one or more nearest available time-domain units (e.g., one or more time-domain units that do not conflict with the broadcast message and have an uplink frequency-domain resource). The second time-domain unit may also include one or more time-domain units where no conflict occurs among the time-domain units used for sending the TBoMS PUSCH.

For example, when sending the TBoMS PUSCH in the manner of the embodiment shown in FIG. 6B, only the 5th slot in one period may be used for sending the TBoMS PUSCH. Since 3 fewer slots are used for sending the TBoMS PUSCH, the nearest 3 available slots after the one period are the 5th slot of each of the next 3 periods. Then, the 5th slots of each of the next 3 periods after the one period may be used as the second time-domain unit for sending the TBoMS PUSCH, thereby meeting the requirement of sending the TBoMS PUSCH over 4 slots.

For example, when sending the TBoMS PUSCH in the manner of the embodiment shown in FIG. 6C, the 3rd to 5th slots in one period may all be used for sending the TBoMS PUSCH. Since 1 fewer slot is used for sending the TBoMS PUSCH, the nearest available slot after the one period may be determined as the 3rd slot of the next period. Then, the 3rd slot of the next period may be used as the second time-domain unit for sending the TBoMS PUSCH, thereby meeting the requirement of sending the TBoMS PUSCH over 4 slots. Correspondingly, the terminal sends the TBoMS PUSCH in the 3rd slot of the next period.

In some embodiments, the predefined rule is used to indicate that: in a case where the first frequency-domain resource of the TBoMS PUSCH is not fully located within the UL subband, the TBoMS PUSCH is received in a second frequency-domain resource, in which the second frequency-domain resource is fully located within the UL subband.

In some embodiments, receiving the TBoMS PUSCH according to the predefined rule includes at least one of: in a case where the first frequency-domain resource of the TBoMS PUSCH is not fully located within the UL subband, determining the second frequency-domain resource within the UL subband; and receiving the TBoMS PUSCH in the second frequency-domain resource.

In some embodiments, according to the predefined rule, the network device receives, in a case where the first frequency-domain resource of the TBoMS PUSCH is not fully located within the UL subband, the TBoMS PUSCH in the second frequency-domain resource, in which the second frequency-domain resource is fully located within the UL subband.

According to the predefined rule, the network device may determine whether the first frequency-domain resource of the TBoMS PUSCH is fully located within the UL subband in the conflicting time-domain unit. When it is determined that the first frequency-domain resource of the TBoMS PUSCH is fully located within the UL subband, the network device may determine the second frequency-domain resource within the UL subband, and then receive the TBoMS PUSCH sent by the terminal in the second frequency-domain resource. Correspondingly, the terminal may send the TBoMS PUSCH in the second frequency-domain resource within the conflicting time-domain unit. Accordingly, it may be ensured that the network device may successfully receive the TBoMS PUSCH within the UL subband in the conflicting time-domain unit, which helps reduce a receiving delay of the TBoMS PUSCH.

In some embodiments, the predefined rule is used to indicate at least one of: in a case where a frequency-domain range of the first frequency-domain resource is less than or equal to a frequency-domain range of the UL subband, receiving the TBoMS PUSCH in the first time-domain unit; or in a case where a frequency-domain range of the first frequency-domain resource is greater than a frequency-domain range of the UL subband, receiving the TBoMS PUSCH in the second time-domain unit.

In some embodiments, receiving, according to the predefined rule, the TBoMS PUSCH sent by the terminal includes at least one of: in a case where a frequency-domain range of the first frequency-domain resource is less than or equal to a frequency-domain range of the UL subband, receiving the TBoMS PUSCH in the first time-domain unit; or in a case where a frequency-domain range of the first frequency-domain resource is greater than a frequency-domain range of the UL subband, receiving the TBoMS PUSCH in the second time-domain unit, in which the second time-domain unit is different from the first time-domain unit.

Before the network device determines the second frequency-domain resource within the UL subband, the network device may first determine a relationship between the frequency-domain range of the first frequency-domain resource and the frequency-domain range of the UL subband. When it is determined that the frequency-domain range of the first frequency-domain resource is greater than the frequency-domain range of the UL subband, the network device cannot determine sufficient frequency-domain resources for receiving the TBoMS PUSCH within the UL subband. Thus, the network device does not need to determine the second frequency-domain resource within the UL subband, nor does it need to receive the TBoMS PUSCH in the first time-domain unit, but instead determines the second time-domain unit for receiving the TBoMS PUSCH. When it is determined that the frequency-domain range of the first frequency-domain resource is less than or equal to the frequency-domain range of the UL subband, the network device may determine sufficient frequency-domain resources for receiving the TBoMS PUSCH within the UL subband, and only then determines the second frequency-domain resource within the UL subband.

For the manner of determining the second time-domain unit, reference may be made to the previous embodiments, which is not repeated in this embodiment.

In some embodiments, the predefined rule is used to indicate at least one of: in a case where a frequency-domain range of the first frequency-domain resource is less than or equal to a frequency-domain range of the UL subband, receiving the TBoMS PUSCH in the first time-domain unit; or in a case where a frequency-domain range of the first frequency-domain resource is greater than a frequency-domain range of the UL subband, not expecting to receive the TBoMS PUSCH in the first time-domain unit.

In some embodiments, receiving the TBoMS PUSCH according to the predefined rule includes at least one of: in a case where the frequency-domain range of the first frequency-domain resource is less than or equal to the frequency-domain range of the UL subband, receiving the TBoMS PUSCH in the first time-domain unit; or in a case where the frequency-domain range of the first frequency-domain resource is greater than the frequency-domain range of the UL subband, not expecting to receive the TBoMS PUSCH in the first time-domain unit.

Before the network device determines the second frequency-domain resource within the UL subband, the network device may first determine the relationship between the frequency-domain range of the first frequency-domain resource and the frequency-domain range of the UL subband. When it is determined that the frequency-domain range of the first frequency-domain resource is greater than the frequency-domain range of the UL subband, the network device cannot determine sufficient frequency-domain resources for receiving the TBoMS PUSCH sent by the terminal within the UL subband. Thus, the network device does not need to determine the second frequency-domain resource within the UL subband, which helps avoid the waste of the network device's resources. When it is determined that the frequency-domain range of the first frequency-domain resource is less than or equal to the frequency-domain range of the UL subband, the network device may determine sufficient frequency-domain resources for receiving the TBoMS PUSCH sent by the terminal within the UL subband, and only then determines the second frequency-domain resource within the UL subband.

In some embodiments, determining the second frequency-domain resource within the UL subband includes: determining, within the UL subband, a frequency-domain resource with a continuous first frequency-domain range starting from a first frequency-domain position as the second frequency-domain resource, in which the first frequency-domain range is determined based on the first frequency-domain resource.

In the case of the embodiment shown in FIG. 6A, since the first frequency-domain resource of the TBoMS PUSCH is not fully located within the UL subband, the network device cannot successfully receive the TBoMS PUSCH sent by the terminal in the conflicting slot according to the configuration and/or scheduling for the terminal. Then, as shown in FIG. 7, according to the predefined rule, the network device may determine the second frequency-domain resource within the UL subbands of the conflicting time-domain units (e.g., slot#1 to slot#3), where the start point of the second frequency-domain resource is the start point of the frequency-domain resource corresponding to the UL subband, and the first frequency-domain range is the same as the frequency-domain range corresponding to the first frequency-domain resource. Then the network device may receive the TBoMS PUSCH in the second frequency-domain resource sent by the terminal.

For example, the frequency-domain range corresponding to the UL subband is RB #20 to RB#40, while the first frequency-domain resource corresponding to the TBoMS PUSCH is RB#35 to RB#45. The terminal may determine that the first frequency-domain resource is not fully located within the UL subband, and the frequency-domain range of the first frequency-domain resource is smaller than frequency-domain range of the UL subband. Then, the network device may determine the second frequency-domain resource (RB#20 to RB#30) within RB#20 to RB#40, with the start point at RB#20 and the duration of 10 RBs. Then the network device may receive the TBoMS PUSCH sent by the terminal in RB#20 to RB#30 during slot#1 to slot#3. Correspondingly, the terminal may send the TBoMS PUSCH in RB#20 to RB#30 during slot#1 to slot#3, and still send the TBoMS PUSCH in RB#20 to RB#30 during slot#4.

In some embodiments, the predefined rule is used to indicate at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit.

In some embodiments, receiving the TBoMS PUSCH according to the predefined rule includes at least one of:
in a case where the first frequency-domain interval between the UL subband and the broadcast message is greater than or equal to the frequency-domain interval threshold, receiving the TBoMS PUSCH in the first time-domain unit;
in a case where the first frequency-domain interval between the UL subband and the broadcast message is less than the frequency-domain interval threshold, not expecting to receive the TBoMS PUSCH in the first time-domain unit;
in a case where the first frequency-domain interval between the TBoMS PUSCH and the broadcast message is greater than or equal to the frequency-domain interval threshold, receiving the TBoMS PUSCH in the first time-domain unit; or
in a case where the first frequency-domain interval between the TBoMS PUSCH and the broadcast message is less than the frequency-domain interval threshold, not expecting to receive the TBoMS PUSCH in the first time-domain unit.

The second time-domain unit is different from the first time-domain unit.

For example, the network device may determine, according to predefined rule, the first frequency-domain interval between the broadcast message and the first frequency-domain resource corresponding to the TBoMS PUSCH in the conflicting time-domain unit.

When the first frequency-domain interval is less than the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast message is relatively significant, which has a relatively large impact on communication quality. Therefore, the network device may determine the second time-domain unit and receive the TBoMS PUSCH in the second time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast messages is relatively small, which has a relatively small impact on communication quality. Therefore, the network device may receive the TBoMS PUSCH in the conflicting time-domain unit.

For example, the network device may determine, according to the predefined rule, the first frequency-domain interval between the UL subband and the broadcast message in the conflicting time-domain unit.

When the first frequency-domain interval is less than the frequency-domain interval threshold, the network device sends the broadcast message in the conflicting time-domain unit, and receives the TBoMS PUSCH and sends the broadcast message in the UL subband of the conflicting time-domain unit. The inter-frequency interference between the TBoMS PUSCH and the broadcast messages is relatively significant, which has a relatively large impact on communication quality. Therefore, the network device may determine the second time-domain unit and receive the TBoMS PUSCH in the second time-domain unit, which helps ensure relatively good communication quality.

When the first frequency-domain interval is greater than or equal to the frequency-domain interval threshold, the network device sends the broadcast message in the conflicting time-domain unit and receives the TBoMS PUSCH in the UL subband of the conflicting time-domain unit. The inter-frequency interference between the TBoMS PUSCH and the broadcast messages is relatively small, which has a relatively small impact on communication quality. Therefore, the terminal may receive the TBoMS PUSCH in the conflicting time-domain unit.

For the manner of determining the second time-domain unit, reference may be made to the previous embodiments, which is not repeated in this embodiment.

In some embodiments, the predefined rule is used to indicate at least one of:
in a case where the first frequency-domain interval between the UL subband and the broadcast message is greater than or equal to the frequency-domain interval threshold, receiving the TBoMS PUSCH in the first time-domain unit;
in a case where the first frequency-domain interval between the UL subband and the broadcast message is less than the frequency-domain interval threshold, not expecting to receive the TBoMS PUSCH in the first time-domain unit;
in a case where the first frequency-domain interval between the TBoMS PUSCH and the broadcast message is greater than or equal to the frequency-domain interval threshold, receiving the TBoMS PUSCH in the first time-domain unit; or
in a case where the first frequency-domain interval between the TBoMS PUSCH and the broadcast message is less than the frequency-domain interval threshold, not expecting to receive the TBoMS PUSCH in the first time-domain unit.

In some embodiments, receiving the TBoMS PUSCH according to the predefined rule includes at least one of:
in a case where the first frequency-domain interval between the UL subband and the broadcast message is greater than or equal to the frequency-domain interval threshold, receiving the TBoMS PUSCH in the first time-domain unit;
in a case where the first frequency-domain interval between the UL subband and the broadcast message is less than the frequency-domain interval threshold, not expecting to receive the TBoMS PUSCH in the first time-domain unit;
in a case where the first frequency-domain interval between the TBoMS PUSCH and the broadcast message is greater than or equal to the frequency-domain interval threshold, receiving the TBoMS PUSCH in the first time-domain unit; or
in a case where the first frequency-domain interval between the TBoMS PUSCH and the broadcast message is less than the frequency-domain interval threshold, not expecting to receive the TBoMS PUSCH in the first time-domain unit.

For example, the network device may determine, according to predefined rule, the first frequency-domain interval between the broadcast message and the first frequency-domain resource corresponding to the TBoMS PUSCH in the conflicting time-domain unit.

When the first frequency-domain interval is less than the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast message is relatively significant, which has a relatively large impact on communication quality. Therefore, the network device does not expect to receive the TBoMS PUSCH sent by the terminal in the conflicting time-domain unit, which helps ensure relatively good communication quality. The terminal does not send the TBoMS PUSCH in the conflicting time-domain unit.

When the first frequency-domain interval is greater than or equal to the frequency-domain interval threshold, the network device sends the broadcast message in the conflicting time-domain unit and receives the TBoMS PUSCH in this conflicting time-domain unit. The inter-frequency interference between the TBoMS PUSCH and the broadcast messages is relatively small, which has a relatively small impact on communication quality. Therefore, the network device may receive the TBoMS PUSCH in the conflicting time-domain unit, and the terminal may send the TBoMS PUSCH in the conflicting time-domain unit.

For example, the network device may determine the first frequency-domain interval between the UL subband and the broadcast message in the conflicting time-domain unit according to the predefined rule.

When the first frequency-domain interval is less than the frequency-domain interval threshold, the network device sends the broadcast message in the conflicting time-domain unit, and receives the TBoMS PUSCH and sends the broadcast message in the UL subband of the conflicting time-domain unit. The inter-frequency interference between the TBoMS PUSCH and the broadcast messages is relatively significant, which has a relatively large impact on communication quality. Therefore, the network device does not expect to receive the TBoMS PUSCH sent by the terminal in the conflicting time-domain unit, which helps ensure relatively good communication quality. The terminal does not expect to send the TBoMS PUSCH in the conflicting time-domain unit.

When the first frequency-domain interval is greater than or equal to the frequency-domain interval threshold, the network device sends the broadcast message in the conflicting time-domain unit and receives the TBoMS PUSCH in the UL subband of the conflicting time-domain unit. The inter-frequency interference between the TBoMS PUSCH and the broadcast messages is relatively small, which has a relatively small impact on communication quality. Therefore, the network device may receive the TBoMS PUSCH sent by the terminal in the conflicting time-domain unit, and the terminal may send the TBoMS PUSCH in the conflicting time-domain unit.

In some embodiments, since a number of time-domain units occupied by the TBoMS PUSCH is fixed, when the network device does not expect to receive the TBoMS PUSCH in the conflicting time-domain units, it may determine one or more nearest available time-domain units (e.g., one or more time-domain units that do not conflict with the broadcast message and have an uplink frequency-domain resource) for receiving the TBoMS PUSCH, so as to make up for the number of time-domain units occupied by the TBoMS PUSCH.

For example, the number of time-domain units occupied by the TBoMS PUSCH is n. When the network device does not expect to receive the TBoMS PUSCH in m conflicting time-domain units (e.g., m is an integer less than or equal to n) within a current TDD period, the network device needs to determine m nearest available time-domain units after the current TDD period to receive the TBoMS PUSCH, so as to ensure that the number of time-domain units occupied by the TBoMS PUSCH is n. Correspondingly, the terminal does not expect to send the TBoMS PUSCH in the m conflicting time-domain units, but sends the TBoMS PUSCH in the m determined nearest available time-domain units after the current TDD period.

For example, in the embodiment shown in FIG. 6A, one TDD period includes 5 slots.

When sending the TBoMS PUSCH in the manner of the embodiment shown in FIG. 6B, only the 5th slot in one period may be used for receiving the TBoMS PUSCH. Since 3 fewer slots are used for receiving the TBoMS PUSCH, the nearest 3 available slots after the one period are the 5th slot of each of the next 3 periods. Then, the TBoMS PUSCH may be received by the network device in the 5th slot of each of the next 3 periods after the one period, thereby meeting the requirement of sending the TBoMS PUSCH over 4 slots. Correspondingly, the terminal sends the TBoMS PUSCH in the 5th slot of each of the next 3 periods after the one period.

When sending the TBoMS PUSCH in the manner of the embodiment shown in FIG. 6C, the 3rd to 5th slots in one period may all be used for receiving the TBoMS PUSCH. Since 1 fewer slot is used for receiving the TBoMS PUSCH, the nearest available slot after the one period may be determined as the 3rd slot of the next period. Then, the TBoMS PUSCH may be received by the network device in the 3rd slot of the next period, thereby meeting the requirement of receiving the TBoMS PUSCH over 4 slots. Correspondingly, the network device sends the TBoMS PUSCH in the 3rd slot of the next period.

In some embodiments, the names of information and the like are not limited to those recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", and "chip" may be replaced with each other.

In some embodiments, terms such as "uplink", "uplink link", and "physical uplink link" may be replaced with each other; terms such as "downlink", "downlink link", and "physical downlink link" may be replaced with each other; terms such as "side", "sidelink", "side communication", "sidelink communication", "direct", "direct link", "direct communication", and "direct link communication" may be replaced with each other.

In some embodiments, terms such as "downlink control information (DCI)", "downlink (DL) assignment", "DL DCI", "uplink (UL) grant", and "UL DCI" may be replaced with each other.

In some embodiments, terms such as "PDSCH" and "DL data" may be replaced with each other; terms such as "PUSCH" and "UL data" may be replaced with each other.

In some embodiments, terms such as "search space", "search space set", "search space configuration", "search space set configuration", "control resource set (CORESET)", and "CORESET configuration" may be replaced with each other.

**In** some embodiments, terms such as "synchronization signal (SS)", "SSB", "reference signal (RS)", "pilot", and "pilot signal" may be replaced with each other.

In some embodiments, terms such as "RB", "physical resource block (PRB)", "sub-carrier group (SCG)", "resource element group (REG)", "PRB pair", "RB pair", "resource element (RE)", and "sub-carrier" may be replaced with each other.

In some embodiments, terms such as "frame", "radio frame", "subframe", "slot", "sub-slot", "mini-slot", "symbol", and "transmission time interval (TTI)" may be replaced with each other.

In some embodiments, terms such as "acquire", "obtain", "gain", "receive", "transmit", "bidirectional transmission", and "send and/or receive" may be replaced with each other. These terms may be interpreted as multiple meanings, such as receiving from other entities, acquiring from protocols, acquiring from higher layers, obtaining through self-processing, and independent implementation.

In some embodiments, terms such as "send", "transmit", "report", "deliver", "transmit", "bidirectional transmission", and "send and/or receive" may be replaced with each other.

In some embodiments, "not expecting to receive" may be interpreted as not receiving on a time-domain resource and/or on a frequency-domain resource, or not performing subsequent processing on data after receiving the data. "Not expecting to send" may be interpreted as not sending, or sending but not expecting the receiver to respond to the sent content.

Correspondingly to the aforementioned embodiments of the method for uplink communication processing, the disclosure also provides embodiments of a terminal and a network device.

The embodiments of the disclosure further provide a terminal, including: one or more processors. The terminal is configured to implement the method for uplink communication processing described in the first aspect and the embodiments of the first aspect.

FIG. 9 is a schematic block diagram of a terminal according to an embodiment of the disclosure. As shown in FIG. 9, the terminal includes: a processing module 901.

**In** some embodiments, the processing module is configured for sending a TBoMS PUSCH according to a predefined rule, in which the TBoMS PUSCH conflicts with a broadcast message in a first time-domain unit, and the first time-domain unit is configured with a UL subband.

In some embodiments, the processing module is configured for at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, sending the TBoMS PUSCH in a second time-domain unit,
in which the second time-domain unit is different from the first time-domain unit.

In some embodiments, the processing module is configured for at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, not expecting to send the TBoMS PUSCH in the first time-domain unit.

In some embodiments, the processing module is configured for, in a case where a first frequency-domain resource of the TBoMS PUSCH is not fully located within the UL subband, determining a second frequency-domain resource within the UL subband; and
sending the TBoMS PUSCH in the second frequency-domain resource.

In some embodiments, the processing module is configured for determining, within the UL subband, a frequency-domain resource with a continuous first frequency-domain range starting from a first frequency-domain position as the second frequency-domain resource, in which the first frequency-domain range is determined based on the first frequency-domain resource.

**In** some embodiments, the processing module is configured for at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, sending the TBoMS PUSCH in a second time-domain unit;
in which the second time-domain unit is different from the first time-domain unit.

In some embodiments, the processing module is configured for at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, not expecting to send the TBoMS PUSCH in the first time-domain unit.

In some embodiments, the processing module is configured for at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit,
in which the second time-domain unit is different from the first time-domain unit.

In some embodiments, the processing module is configured for at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

In some embodiments, the second time-domain unit is not configured with a subband.

In some embodiments, a case where the TBoMS PUSCH conflicts with the broadcast message in a time-domain unit configured with a subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

In some embodiments, the broadcast message includes at least one of: an SSB; or a CSS.

It should be noted that the network device shown in FIG. 9 may include not only the modules of the above embodiments but also other modules (e.g., a communication module and a storage module), and the embodiments of the disclosure are not limited thereto.

The embodiments of the disclosure further provide a network device, including: one or more processors, in which the network device is configured to implement the uplink communication processing method described in the second aspect and the embodiments of the second aspect.

FIG. 10 is a schematic block diagram of a network device according to an embodiment of the disclosure. As shown in FIG. 10, the network device includes: a processing module 1001.

In some embodiments, the processing module is configured for receiving a TBoMS PUSCH according to a predefined rule, in which the TBoMS PUSCH conflicts with a broadcast message in a first time-domain unit, and the first time-domain unit is configured with a UL subband.

In some embodiments, the processing module is configured for at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, receiving the TBoMS PUSCH in a second time-domain unit,
in which the second time-domain unit is different from the first time-domain unit.

In some embodiments, the processing module is configured for at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, not expecting to receive the TBoMS PUSCH in the first time-domain unit.

In some embodiments, the processing module is configured for, in a case where a first frequency-domain resource of the TBoMS PUSCH is not fully located within the UL subband, determining a second frequency-domain resource within the UL subband; and
receiving the TBoMS PUSCH in the second frequency-domain resource.

In some embodiments, the processing module is configured for determining, within the UL subband, a frequency-domain resource with a continuous first frequency-domain range starting from a first frequency-domain position as the second frequency-domain resource, in which the first frequency-domain range is determined based on the first frequency-domain resource.

In some embodiments, the processing module is configured for at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, receiving the TBoMS PUSCH in a second time-domain unit,
in which the second time-domain unit is different from the first time-domain unit.

In some embodiments, the processing module is configured for at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, not expecting to receive the TBoMS PUSCH in the first time-domain unit.

In some embodiments, the processing module is configured for at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit;
in which the second time-domain unit is different from the first time-domain unit.

In some embodiments, the processing module is configured for at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit.

In some embodiments, the second time-domain unit is not configured with a subband.

In some embodiments, a case where the TBoMS PUSCH conflicts with the broadcast message in a time-domain unit configured with a subband includes at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
**the** TBoMS PUSCH and the broadcast message being in the same time-domain unit configured with the subband.

In some embodiments, the broadcast message includes at least one of: an SSB; or a CSS.

It should be noted that the network device shown in FIG. 10 may include not only the modules of the above embodiments but also other modules (e.g., a communication module and a storage module), and the embodiments of the disclosure are not limited thereto.

The apparatus embodiments basically correspond to the method embodiments, thus reference may be made to the descriptions in the method embodiments for relevant parts. The apparatus embodiments described above are merely illustrative. The modules described as separate components may or may not be physically separated, and components shown as modules may or may not be physical modules, that is, the modules may be located in one place, or may be distributed across a plurality of network modules. Some or all of the modules may be selected according to actual needs to achieve the objectives of the solutions of this embodiment, which may be understood and implemented by those of ordinary skill in the art without exerting creative efforts.

The embodiments of the disclosure further provides a method for uplink communication processing, and the method includes: a terminal sending a TBoMS PUSCH according to a predefined rule, in which the TBoMS PUSCH conflicts with a broadcast message in a first time-domain unit, and the first time-domain unit is configured with a UL subband; and a network device receiving, according to the predefined rule, the TBoMS PUSCH sent by the terminal.

The embodiments of the disclosure further provides a terminal, and the terminal includes: one or more processors, in which the terminal is configured to implement the method for uplink communication processing according to the above first aspect and the embodiments of the first aspect.

The embodiments of the disclosure further provides a network device, and the network device includes: one or more processors, in which the network device is configured to implement the method for uplink communication processing according to the above second aspect and the embodiments of the second aspect.

The embodiments of the disclosure further provides a communication device, and the communication device includes: one or more processors, in which the one or more processors are configured to the invoke instructions to cause the communication device to perform the method for uplink communication processing according to the first aspect and the embodiments of the first aspect, or according to the second aspect and the embodiments of the second aspect.

The embodiments of the disclosure further provides a communication system, and the communication system includes: a terminal and a network device, in which the terminal is configured to implement the method for uplink communication processing according to the first aspect and the embodiments of the first aspect, and the network device is configured to implement the method for uplink communication processing the second aspect and the embodiments of the second aspect.

The embodiments of the disclosure further provides a storage medium, and the storage medium stores instructions which, when run on a communication device, cause the communication device to implement the method for uplink communication processing according to the first aspect and the embodiments of the first aspect, or according to the second aspect and the embodiments of the second aspect.

The embodiments of the disclosure further provides an apparatus for implementing any of the above methods. For example, an apparatus is provided, which includes units or modules configured to implement each step performed by the terminal in any of the above methods. For another example, another apparatus is provided, which includes units or modules configured to implement each step performed by the network device (e.g., an access network device, a core network function node, a core network device, etc.) in any of the above methods.

It should be understood that the division of units or modules in the above apparatus is merely a logical function division. In actual implementation, all or part of units or modules may be integrated into a single physical entity, or may be physically separated. In addition, the units or modules in the units or modules may be implemented in the form of processor invoking software: for example, the units or modules includes a processor connected to a memory, where instructions are stored in the memory, and the processor invokes the instructions stored in the memory to implement any of the above methods or the functions of each unit or module of the above apparatus. The processor may be a general-purpose processor, such as a central processing unit (CPU) or a microprocessor, and the memory may be an internal memory of the apparatus or an external memory of the apparatus. Alternatively, the units or modules in the apparatus may be implemented in the form of hardware circuits, and the functions of some or all units or modules may be implemented through the design of hardware circuits. The above hardware circuits may be understood as one or more processors; for example, in one implementation, the hardware circuits are application-specific integrated circuits (ASICs), and the functions of some or all of the above units or modules are implemented through the design of logical relationships between components in the circuits; for another example, in another implementation, the hardware circuits may be implemented through programmable logic devices (PLDs). Taking field programmable gate arrays (FPGAs) as an example, they may include a large number of logic gate circuits, and the connection relationships between the logic gate circuits are configured through configuration files to implement the functions of some or all of the above units or modules. All units or modules of the above apparatus may be fully implemented in the form of processor invoking software, fully implemented in the form of hardware circuits, or partially implemented in the form of processor invoking software and the remaining part implemented in the form of hardware circuits.

In the embodiments of the disclosure, the processor is a circuit with signal processing capability. In one implementation, the processor may be a circuit with instruction reading and running capabilities, such as a CPU, a microprocessor, a graphics processing unit (GPU) (which may be understood as a microprocessor), or a digital signal processor (DSP). In another implementation, the processor may implement certain functions through the logical relationship of hardware circuits, where the logical relationship of the hardware circuits is fixed or reconfigurable. For example, the processor is a hardware circuit implemented by an application-specific integrated circuit (ASIC) or a programmable logic device (PLD), such as an FPGA. In a reconfigurable hardware circuit, the process in which the processor loads a configuration file to implement a hardware circuit configuration may be understood as the process in which the processor loads instructions to implement the functions of some or all of the above units or modules. In addition, the processor may also be a hardware circuit designed for artificial intelligence, which may be understood as an ASIC, such as a neural network processing unit (NPU), a tensor processing unit (TPU), or a deep learning processing unit (DPU).

FIG. 11 is a schematic diagram of a communication device 11100 proposed in an embodiment of the disclosure. The communication device 11100 may be a network device (e.g., an access network device, a core network device, etc.), a terminal (e.g., a UE, etc.), a chip, a chip system, or a processor that supports the network device to implement any of the above methods, or a chip, a chip system, or a processor that supports the terminal to implement any of the above methods. The communication device 11100 may be configured to implement the methods described in the above method embodiments, and specific reference may be made to the descriptions in the above method embodiments.

**As** shown in FIG. 11, the communication device 11100 includes one or more processors 11101. The processor 11101 may be a general-purpose processor or a special-purpose processor, such as a baseband processor or a central processing unit. The baseband processor may be configured to process communication protocols and communication data, and the central processing unit may be configured to control the communication device (e.g., a base station, a baseband chip, a terminal device, a terminal device chip, a DU, or a CU), execute programs, and process program data. The processor 11101 is configured to invoke instructions to cause the communication device 11100 to execute any of the above methods.

In some embodiments, the communication device 11100 further includes one or more memories 11102 for storing instructions. In some embodiments, all or part of the memory 11102 may also be located outside the communication device 11100.

In some embodiments, the communication device 11100 further includes one or more transceivers 11103. When the communication device 11100 includes one or more transceivers 11103, communication steps such as sending and receiving in the above methods are performed by the transceiver 11103, and other steps are performed by the processor 11101.

In some embodiments, the transceiver may include a receiver and a transmitter, which may be separate or integrated. In some embodiments, terms such as transceiver, transceiver unit, transceiver machine, and transceiver circuit may be replaced with each other, and terms such as transmitter, transmission unit, transmitter machine, and transmission circuit may be replaced with each other, and terms such as receiver, receiving unit, receiver machine, and receiving circuit may be replaced with each other.

In some embodiments, the communication device 11100 further includes one or more interface circuits 11104 connected to the memory 11102. The interface circuit 11104 may be configured to receive signals from the memory 11102 or other apparatuses, and may be configured to send signals to the memory 11102 or other apparatuses. For example, the interface circuit 11104 may read instructions stored in the memory 11102 and send the instructions to the processor 11101.

The communication device 11100 described in the above embodiments may be a network device or a terminal, but the scope of the communication device 11100 described in the disclosure is not limited thereto, and the structure of the communication device 11100 may not be limited by FIG. 11. The communication device may be an independent device or part of a larger device. For example, the communication device may be: 1) an independent integrated circuit (IC), a chip, or a chip system or subsystem; (2) a collection of one or more ICs, in some embodiments, the above IC collection may also include a storage component for storing data and programs; (3) an ASIC, such as a modem; (4) a module embeddable in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others.

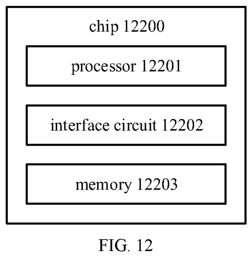

FIG. 12 is a schematic diagram of a chip 12200 proposed in an embodiment of the disclosure. When the communication device 11100 is a chip or a chip system, reference may be made to the schematic diagram of the chip 12200 shown in FIG. 12, but it is not limited thereto.

The chip 12200 includes one or more processors 12201 configured to invoke instructions to cause the chip 12200 to execute any of the above methods.

In some embodiments, the chip 12200 further includes one or more interface circuits 12202 connected to a memory 12203. The interface circuit 12202 may be configured to receive signals from the memory 12203 or other apparatuses, and may be configured to send signals to the memory 12203 or other apparatuses.

For example, the interface circuit 12202 may read instructions stored in the memory 12203 and send the instructions to the processor 12201. In some embodiments, terms such as interface circuit, interface, transceiver pin, and transceiver may be replaced with each other.

In some embodiments, the chip 12200 further includes one or more memories 12203 for storing instructions. In some embodiments, all or part of the memory 12203 may be located outside the chip 12200.

The disclosure further provides a storage medium on which instructions are stored. When the instructions are run on the communication device 11100, the communication device 11100 is caused to execute any of the above methods. In some embodiments, the storage medium is an electronic storage medium. In some embodiments, the storage medium is a computer-readable storage medium, but it is not limited thereto, and may also be a storage medium readable by other devices. In some embodiments, the storage medium is a non-transitory storage medium, but it is not limited thereto, and may also be a transitory storage medium.

The disclosure further provides a program product. When the program product is executed by the communication device 11100, the communication device 11100 is caused to execute any of the above methods. In some embodiments, the program product is a computer program product.

The disclosure further provides a computer program which, when run on a computer, causes the computer to execute any of the above methods.

## Claims

1. A method for uplink communication processing, comprising:
sending a transport block processing over multiple slots (TBoMS) physical uplink shared channel (PUSCH) according to a predefined rule, wherein the TBoMS PUSCH conflicts with a broadcast message in a first time-domain unit, and the first time-domain unit is configured with an uplink subband (UL subband).

2. The method according to claim 1, wherein sending the TBoMS PUSCH according to the predefined rule comprises at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, sending the TBoMS PUSCH in a second time-domain unit,
wherein the second time-domain unit is different from the first time-domain unit.

3. The method according to claim 1, wherein sending the TBoMS PUSCH according to the predefined rule comprises at least one of:
in a case where a first frequency-domain resource of the TBoMS PUSCH is fully located within the UL subband, sending the TBoMS PUSCH in the first time-domain unit; or
in a case where a first frequency-domain resource of the TBoMS PUSCH is not fully located within the UL subband, not expecting to send the TBoMS PUSCH in the first time-domain unit.

4. The method according to claim 1, wherein sending the TBoMS PUSCH according to the predefined rule comprises:
in a case where a first frequency-domain resource of the TBoMS PUSCH is not fully located within the UL subband, determining a second frequency-domain resource within the UL subband; and
sending the TBoMS PUSCH in the second frequency-domain resource.

5. The method according to claim 4, wherein determining the second frequency-domain resource within the UL subband comprises:
determining, within the UL subband, a frequency-domain resource with a continuous first frequency-domain range starting from a first frequency-domain position as the second frequency-domain resource, wherein the first frequency-domain range is determined based on the first frequency-domain resource.

6. The method according to any one of claims 4 to 5, wherein sending the TBoMS PUSCH according to the predefined rule further comprises at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, sending the TBoMS PUSCH in a second time-domain unit,
wherein the second time-domain unit is different from the first time-domain unit.

7. The method according to any one of claims 4 to 5, wherein sending the TBoMS PUSCH according to the predefined rule further comprises at least one of:
in a case where a frequency-domain range of the first frequency-domain resource is less than or equal to a frequency-domain range of the UL subband, sending the TBoMS PUSCH in the first time-domain unit; or
in a case where a frequency-domain range of the first frequency-domain resource is greater than a frequency-domain range of the UL subband, not expecting to send the TBoMS PUSCH in the first time-domain unit.

8. The method according to claim 1, wherein sending the TBoMS PUSCH according to the predefined rule further comprises at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit,
wherein the second time-domain unit is different from the first time-domain unit.

9. The method according to claim 1, wherein sending the TBoMS PUSCH according to the predefined rule further comprises at least one of:
in a case where a first frequency-domain interval between the UL subband and the broadcast message is greater than or equal to a frequency-domain interval threshold, sending the TBoMS PUSCH in the first time-domain unit;
in a case where a first frequency-domain interval between the UL subband and the broadcast message is less than a frequency-domain interval threshold, not expecting to send the TBoMS PUSCH in the first time-domain unit;
in a case where a first frequency-domain interval between the TBoMS PUSCH and the broadcast message is greater than or equal to a frequency-domain interval threshold, sending the TBoMS PUSCH in the first time-domain unit; or
in a case where a first frequency-domain interval between the TBoMS PUSCH and the broadcast message is less than a frequency-domain interval threshold, not expecting to send the TBoMS PUSCH in the first time-domain unit.

10. The method according to any one of claims 2, 6 and 8, wherein the second time-domain unit is not configured with a subband.

11. The method according to any one of claims 1 to 10, wherein a case where the TBoMS PUSCH conflicts with the broadcast message in a time-domain unit configured with a subband comprises at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

12. The method according to any one of claims 1 to 11, wherein the broadcast message comprises at least one of:
a synchronization signal block (SSB); or
a common search space (CSS).

13. A method for uplink communication processing, comprising:
receiving, according to a predefined rule, a transport block processing over multiple slots (TBoMS) physical uplink shared channel (PUSCH) sent by a terminal, wherein the TBoMS PUSCH conflicts with a broadcast message in a first time-domain unit, and the first time-domain unit is configured with an uplink subband (UL subband).

14. The method according to claim 13, wherein receiving, according to the predefined rule, the TBoMS PUSCH sent by the terminal comprises at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, receiving the TBoMS PUSCH in a second time-domain unit,
wherein the second time-domain unit is different from the first time-domain unit.

15. The method according to claim 13, wherein receiving, according to the predefined rule, the TBoMS PUSCH sent by the terminal comprises at least one of:
in a case where a first frequency-domain resource of the TBoMS PUSCH is fully located within the UL subband, receiving the TBoMS PUSCH in the first time-domain unit; or
in a case where a first frequency-domain resource of the TBoMS PUSCH is not fully located within the UL subband, not expecting to receive the TBoMS PUSCH in the first time-domain unit.

16. The method according to claim 13, wherein receiving, according to the predefined rule, the TBoMS PUSCH sent by the terminal comprises:
in a case where a first frequency-domain resource of the TBoMS PUSCH is not fully located within the UL subband, determining a second frequency-domain resource within the UL subband; and
receiving the TBoMS PUSCH in the second frequency-domain resource.

17. The method according to claim 16, wherein determining the second frequency-domain resource within the UL subband comprises:
determining, within the UL subband, a frequency-domain resource with a continuous first frequency-domain range starting from a first frequency-domain position as the second frequency-domain resource, wherein the first frequency-domain range is determined based on the first frequency-domain resource.

18. The method according to any one of claims 16 to 17, wherein receiving, according to the predefined rule, the TBoMS PUSCH sent by the terminal comprises at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, receiving the TBoMS PUSCH in a second time-domain unit,
wherein the second time-domain unit is different from the first time-domain unit.

19. The method according to any one of claims 16 to 17, wherein receiving, according to the predefined rule, the TBoMS PUSCH sent by the terminal comprises at least one of:
in a case where a frequency-domain range of the first frequency-domain resource is less than or equal to a frequency-domain range of the UL subband, receiving the TBoMS PUSCH in the first time-domain unit; or
in a case where a frequency-domain range of the first frequency-domain resource is greater than a frequency-domain range of the UL subband, not expecting to receive the TBoMS PUSCH in the first time-domain unit.

20. The method according to claim 13, wherein receiving, according to the predefined rule, the TBoMS PUSCH sent by the terminal comprises at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit;
wherein the second time-domain unit is different from the first time-domain unit.

21. The method according to claim 13, wherein receiving, according to the predefined rule, the TBoMS PUSCH sent by the terminal comprises at least one of:
in a case where a first frequency-domain interval between the UL subband and the broadcast message is greater than or equal to a frequency-domain interval threshold, receiving the TBoMS PUSCH in the first time-domain unit;
in a case where a first frequency-domain interval between the UL subband and the broadcast message is less than a frequency-domain interval threshold, not expecting to receive the TBoMS PUSCH in the first time-domain unit;
in a case where a first frequency-domain interval between the TBoMS PUSCH and the broadcast message is greater than or equal to a frequency-domain interval threshold, receiving the TBoMS PUSCH in the first time-domain unit; or
in a case where a first frequency-domain interval between the TBoMS PUSCH and the broadcast message is less than a frequency-domain interval threshold, not expecting to receive the TBoMS PUSCH in the first time-domain unit.

22. The method according to any one of claims 14, 18 and 20, wherein the second time-domain unit is not configured with a subband.

23. The method according to any one of claims 13 to 22, wherein a case where the TBoMS PUSCH conflicts with the broadcast message in a time-domain unit configured with a subband comprises at least one of:
a first time-domain resource of the TBoMS PUSCH in the time-domain unit configured with the subband partially overlapping with a second time-domain resource of the broadcast message in the time-domain unit;
a first time-domain resource of the TBoMS PUSCH in the time-domain unit configured with the subband fully overlapping with a second time-domain resource of the broadcast message in the time-domain unit; or
the TBoMS PUSCH and the broadcast message being in the same time-domain unit configured with the subband.

24. The method according to any one of claims 13 to 23, wherein the broadcast message comprises at least one of:
a synchronization signal block (SSB); or
a common search space (CSS).

25. A method for uplink communication processing, comprising:
a terminal sending a transport block processing over multiple slots (TBoMS) physical uplink shared channel (PUSCH) according to a predefined rule, wherein the TBoMS PUSCH conflicts with a broadcast message in a first time-domain unit, and the first time-domain unit is configured with an uplink subband (UL subband); and
a network device receiving, according to the predefined rule, the TBoMS PUSCH sent by the terminal.

26. A terminal, comprising:
one or more processors,
wherein the terminal is configured to implement the method for uplink communication processing according to any one of claims 1 to 12.

27. A network device, comprising:
one or more processors,
wherein the network device is configured to implement the method for uplink communication processing according to any one of claims 13 to 24.

28. A communication device, comprising:
one or more processors,
wherein the one or more processors are configured to invoke instructions to cause the communication device to perform the method for uplink communication processing according to any one of claims 1 to 12 or any one of claims 13 to 24.

29. A communication system, comprising a terminal and a network device, wherein the terminal is configured to implement the method for uplink communication processing according to any one of claims 1 to 12, and the network device is configured to implement the method for uplink communication processing according to any one of claims 13 to 24.

30. A storage medium storing instructions which, when run on a communication device, cause the communication device to implement the method for uplink communication processing according to any one of claims 1 to 12 or any one of claims 13 to 24.
